# EUROPEAN PATENT SPECIFICATION

(11) **EP 2 338 821 B1**
(45) Date of publication and mention of the grant of the patent: **25.11.2015**
(21) Application number: 08877561.4
(22) Date of filing: 24.10.2008
(51) Int. Cl.: B66B 5/02, B66B 17/34, B66B 5/00, B66B 5/18

(54) **ELEVATOR**
AUFZUG
ASCENSEUR

(43) Date of publication of application: 29.06.2011
(60) Divisional application: 15152296.8
(73) Proprietor: Mitsubishi Electric Corporation, Tokyo 100-8310 (JP)
(72) Inventor: OKADA, Daisuke, Tokyo 100-8310 (JP)
(74) Representative: Hoffmann Eitle
(86) International application number: PCT/JP2008/069334
(87) International publication number: WO 2010/046995

(56) References cited:
- WO-A1-2005/087643
- JP-A- 5 147 854
- JP-A- 2001 019 292
- JP-A- 2001 019 292
- JP-A- 2001 233 563
- JP-A- 2001 233 563
- JP-A- 2003 212 450

## Description

### TECHNICAL FIELD

The present invention relates to an elevator that includes a car braking apparatus that applies braking to a car by engaging with a car guide rail.

### BACKGROUND ART

Conventional elevator emergency braking apparatuses include: a gripper that is disposed on a cage of an elevator, and that has an inclined surface and a pressing surface that are disposed on opposite sides of a guide rail; a pressing body that is movably disposed between the inclined surface of the gripper and the guide rail; and a solenoid that is activated by inputting an electrical signal, that is connected to the pressing body, and that separates the pressing body from the guide rail during normal operation and pushes the pressing body in between the inclined surface and the guide rail during braking (see Patent Literature 1, for example).

[Patent Literature 1]
WO 03/008317

JP 2001-233563 A disclosed An elevator comprising:
- a car guide rail that is disposed so as to extend vertically inside a hoistway;
- a car, hoistably installed inside said hoistway so as to be guided by said car guide rail; and
- a car braking apparatus comprising:
   - a main body portion that is installed on said car, said main body portion comprising:
      - first and second movable arms configured such that second end portions move toward or away from each other, and that are disposed such that an axial direction of said coupling shaft is oriented in a vertical direction, and said first end portions face each other on opposite sides of said car guide rail;
      - braking members, fixed so as to face each other;
      - a forcing member that forces said first and second movable arms so as to pivot said first and second movable arms in a direction in which said braking members hold said car guide rail under pressure; and
      - an actuator that generates an electromagnetic force that pivots said first and second movable arms in opposition to said force from said forcing member such that said second end portions of said first and second movable arms move closer together; and
      a controlling means that controls generation of an electromagnetic force in said actuator,
   - said car braking apparatus engaging with said car guide rail to apply braking to said car, said elevator further comprising:
      - an extended mechanical power transmitting wire that comprises:
         - a tubular extended outer wire and
         - an extended inner wire that is inserted through said extended outer wire so as to be slidable on an inner peripheral surface of said extended outer wire; and
         - a wire pulling means that is configured so as to be coupleable to a second end of said extended outer wire that has a first end that is coupled to said second movable arm, and that is configured so as to enable said force to be applied that pivots said first and second movable arms around said coupling shaft in a direction that moves said second end portions of said first and second movable arms closer to each other by means of said extended mechanical power transmitting wire by pulling said extended inner wire in a direction in which a second end of said extended inner wire is pulled out from said second end of said extended outer wire when coupled to said extended outer wire.

Accordingly, the device does not operate upon rescue lowering of the car and thereby rescue work for occupants in the car is facilitated.

### DISCLOSURE OF THE INVENTION

### PROBLEM TO BE SOLVED BY THE INVENTION

However, in conventional elevator emergency braking apparatuses, the solenoid is the only means of releasing braking of the car. Consequently, if the pressing body is pushed into the gripper due to failure of the solenoid, and unexpected braking of the car has occurred, it is necessary to replace or repair the solenoid to release braking of the car.

When performing replacement or repair of the solenoid in conventional elevator emergency braking apparatuses, it is necessary for maintenance personnel to enter the hoistway and perform work on top of the car, etc. For this reason, before replacing or repairing the solenoid, it is necessary for maintenance personnel to adopt countermeasures such as preventing the car from accidentally moving by itself when braking of the car by the solenoid is released, etc.

Because the countermeasures that are adopted before and during replacement or repair of the solenoid make the work take longer, if unexpected braking is applied to the car due to solenoid failure, and the car is stopped between floors, one problem has been that passengers who cannot leave the car are placed in a state of anxiety for a long period of time.

The present invention aims to solve the above problems and an object of the present invention is to provide an elevator that includes: a car braking apparatus that engages with a car by engaging with a car guide rail; and a remote braking release mechanism that is configured so as to be coupleable to the car braking apparatus, and that can release braking of the car by remote control, to enable braking of the car to be released even if unexpected braking has been applied to the car due to actuator failure in the car braking apparatus.

### MEANS FOR SOLVING THE PROBLEM

In order to achieve the above object, according to one aspect of the present invention, there is provided an elevator including: a car guide rail that is disposed so as to extend vertically inside a hoistway; a car that is hoistably installed inside the hoistway so as to be guided by the car guide rail; and a car braking apparatus that engages with the car guide rail to apply braking to the car, wherein the car braking apparatus includes: a main body portion that is installed on the car, the main body portion including: first and second movable arms that are configured such that intermediate portions are coupled by a coupling shaft so as to be pivotable around the coupling shaft, such that second end portions move toward or away from each other in a different direction from first ends when first end portions move toward or away from each other, and that are disposed such that an axial direction of the coupling shaft is oriented in a vertical direction, and the first end portions face each other on opposite sides of the car guide rail; braking members that are fixed near the first ends of the first and second movable arms so as to face each other; a forcing member that forces the first and second movable arms so as to pivot the first and second movable arms in a direction in which the braking members hold the car guide rail under pressure; and an actuator that generates an electromagnetic force that pivots the first and second movable arms in opposition to the force from the forcing member such that the second end portions of the first and second movable arms move closer together; and a controlling means that controls generation of an electromagnetic force in the actuator, the elevator being characterized in including a remote braking release mechanism that is coupled to the car braking apparatus, and that is configured so as to enable a force to be applied by operation from a landing that pivots the first and second movable arms around the coupling shaft in a direction that moves the second end portions of the first and second movable arms closer to each other.

### EFFECTS OF THE INVENTION

According to the present invention, because the elevator includes a remote braking release mechanism that is coupled to a car braking apparatus, and that applies a force by operation from a landing that pivots first and second movable arms around a coupling shaft in a direction that moves second end portions of the movable arms closer to each other, maintenance personnel can release the braking of the car using the remote braking release mechanism even if unexpected braking is applied to the car due to actuator failure. Thus, because work that takes a long time such as replacement or repair of the actuators, countermeasures to prevent the car from moving by itself, etc., is no longer required, and the passengers inside the cage can be moved to the landing promptly, passengers will no longer be placed in a state of anxiety for a long period of time.

### BRIEF DESCRIPTION OF THE DRAWINGS

Figure 1 is a schematic diagram of an elevator according to Embodiment 1 of the present invention;
Figure 2 is a cross section that is taken along Line II - II in Figure 1 so as to be viewed from the direction of the arrows;
Figure 3 is a cross section that is taken along Line III - III in Figure 2 so as to be viewed from the direction of the arrows;
Figure 4 is a top plan of a car braking apparatus of the elevator according to Embodiment 1 of the present invention;
Figure 5 is a schematic diagram of the elevator according to Embodiment 1 of the present invention;
Figure 6 is a top plan of the car braking apparatus of the elevator according to Embodiment 1 of the present invention;
Figure 7 is a cross section along a direction of extension of an extended mechanical power transmitting wire of a remote braking release mechanism of the elevator according to Embodiment 1 of the present invention;
Figure 8 is a top plan of a wire tension applying means of the remote braking release mechanism of the elevator according to Embodiment 1 of the present invention;
Figure 9 is a front elevation of the wire tension applying means of the remote braking release mechanism of the elevator according to Embodiment 1 of the present invention;
Figure 10 is a diagram that explains an operation to release braking of a car by the car braking apparatus of the elevator according to Embodiment 1 of the present invention using the remote braking release mechanism;
Figure 11 is a schematic diagram of an elevator according to Embodiment 2;
Figure 12 is a top plan of a vicinity of a car braking apparatus of the elevator according to Embodiment 2;
Figure 13 is a schematic diagram of an elevator according to Embodiment 3;
Figure 14 is a cross section along a direction of extension of a car mechanical power transmitting wire of the elevator according to Embodiment 3;
Figure 15 is a top plan of a wire coupling mechanism of a remote braking release mechanism of the elevator according to Embodiment 3;
Figure 16 is a front elevation of the wire coupling mechanism of the remote braking release mechanism of the elevator according to Embodiment 3;
Figure 17 is a schematic diagram of an elevator according to Embodiment 4;
Figure 18 is a schematic diagram of an elevator according to Embodiment 5;
Figure 19 is a schematic diagram of an elevator according to Embodiment 6;
Figure 20 is a perspective of a vicinity of a car of the elevator according to Embodiment 6;
Figure 21 is a top plan of a car braking apparatus of the elevator according to Embodiment 6;
Figure 22 is an enlargement of portion C in Figure 20;
Figure 23 is a schematic diagram of an elevator according to Embodiment 7; and
Figure 24 is a schematic diagram of an elevator according to Embodiment 8.

### BEST MODE FOR CARRYING OUT THE INVENTION

Preferred embodiments of the present invention will now be explained with reference to the drawings.

### Embodiment 1

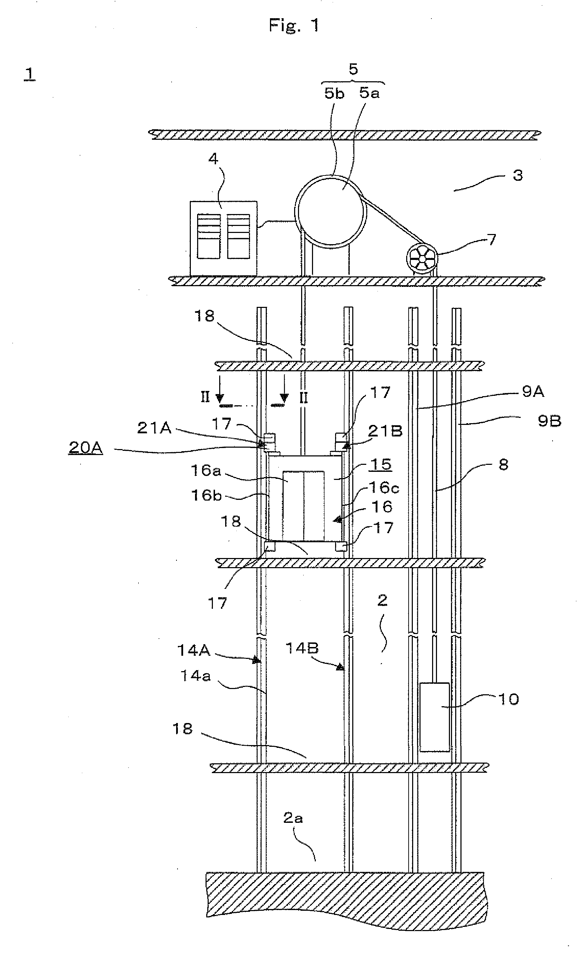

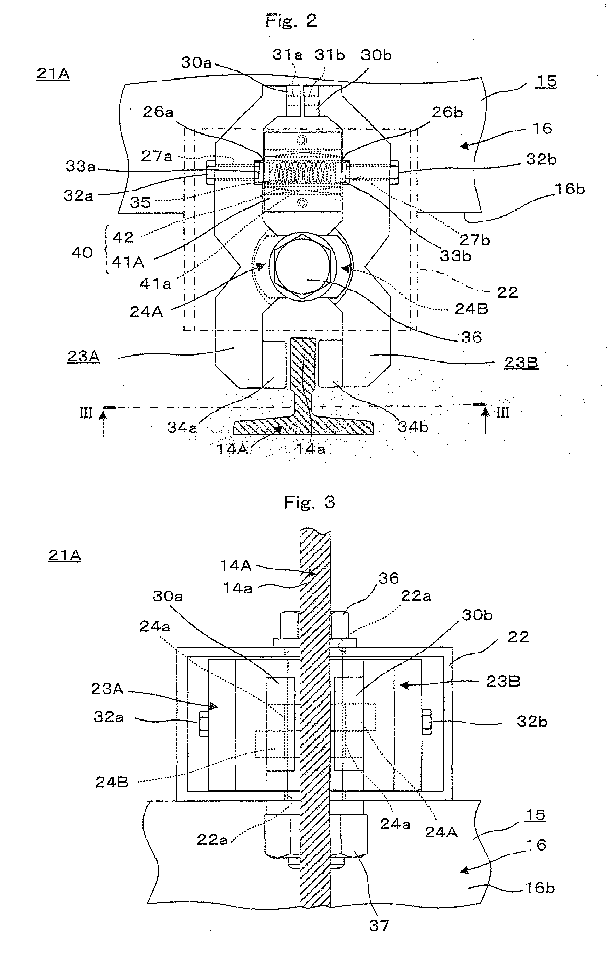

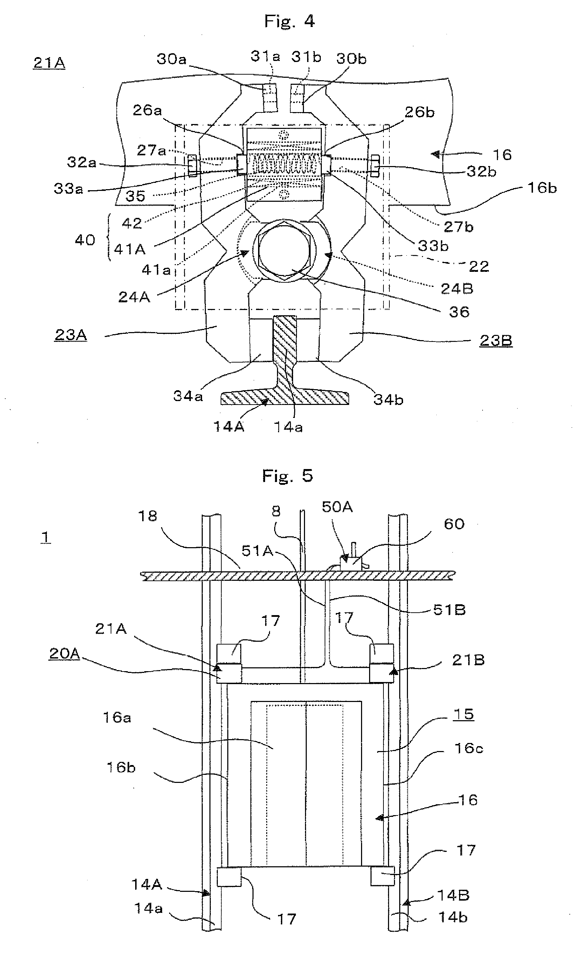

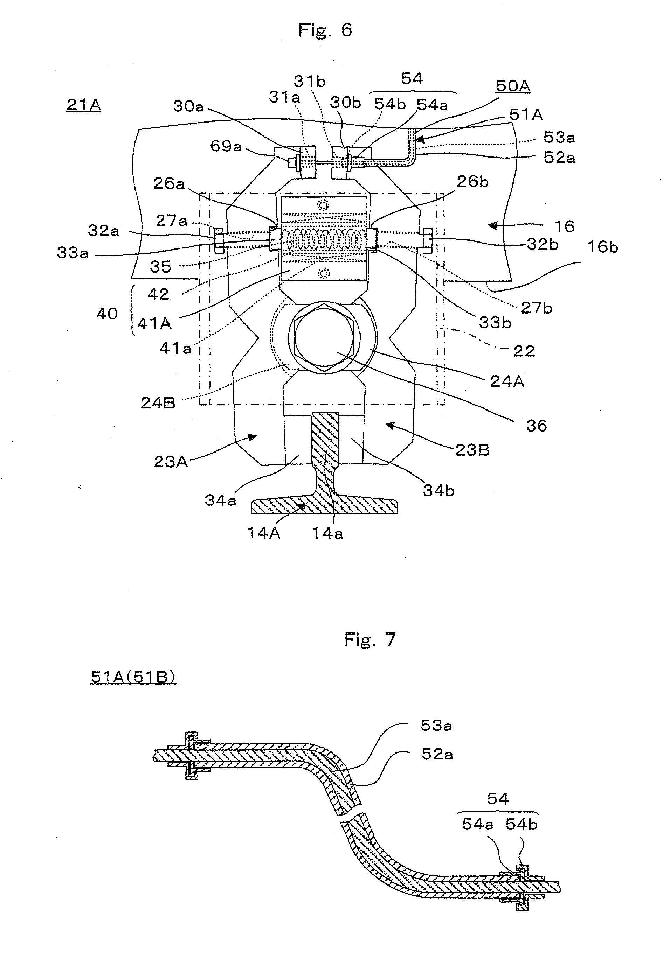

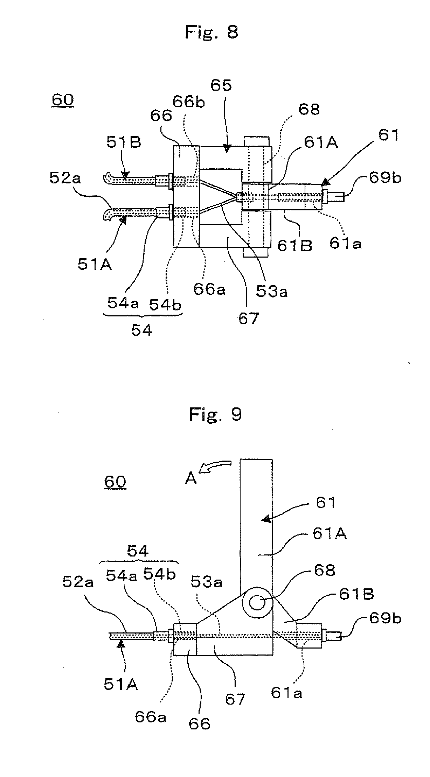

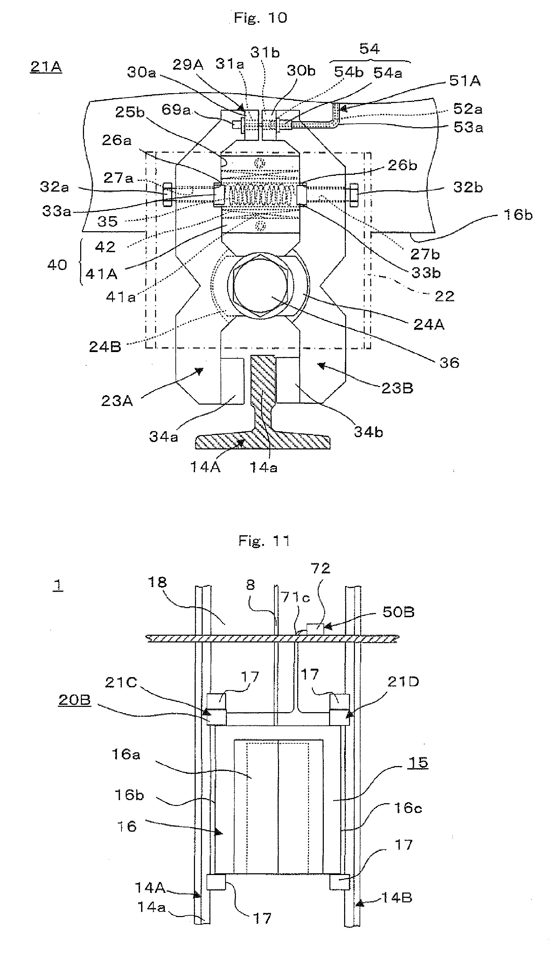

Figure 1 is a schematic diagram of an elevator according to Embodiment 1 of the present invention, and shows a state in which a remote braking release mechanism has been removed from a car braking apparatus. Figure 2 is a cross section that is taken along Line II - II in Figure 1 so as to be viewed from the direction of the arrows, and shows a state in which braking of a car by the car braking apparatus is released. Figure 3 is a cross section that is taken along Line III - III in Figure 2 so as to be viewed from the direction of the arrows, and Figure 4 is a top plan of the car braking apparatus of the elevator according to Embodiment 1 of the present invention, and shows a state in which braking is being applied to the car. Figure 5 is a schematic diagram of the elevator according to Embodiment 1 of the present invention, and shows a state in which the remote braking release mechanism has been mounted to the car braking apparatus. Figure 6 is a top plan of the car braking apparatus of the elevator according to Embodiment 1 of the present invention, and shows a state in which the remote braking release mechanism has been mounted to the car braking apparatus. Figure 7 is a cross section along a direction of extension of an extended mechanical power transmitting wire of the remote braking release mechanism of the elevator according to Embodiment 1 of the present invention, Figure 8 is a top plan of a wire tension applying means of the remote braking release mechanism of the elevator according to Embodiment 1 of the present invention, Figure 9 is a front elevation of the wire tension applying means of the remote braking release mechanism of the elevator according to Embodiment 1 of the present invention, and Figure 10 is a diagram that explains an operation to release braking of the car by the car braking apparatus of the elevator according to Embodiment 1 of the present invention using the remote braking release mechanism.

Moreover, in Figure 1, depiction of walls and landing doors other than the floors of the landings has been omitted to facilitate explanation. In Figures 2 through 4, and Figures 6 and 10, depiction of guide shoes has also been omitted, and configuration of a main body portion that is disposed inside a case is represented by solid lines, and the case is represented by dotted chain lines.

In Figures 1 through 5, an elevator 1 includes: a machine room 3 that is installed in an upper portion of a hoistway 2; a hoisting machine 5 and a deflecting sheave 7 that are each disposed in the machine room 3; a main rope 8 that is looped around the driving sheave 5a of the hoisting machine 5 and the deflecting sheave 7 and is hung down into the hoistway 2; and a car 15 that has a cage 16 and a car frame (not shown) that supports the cage 16, and that is coupled to a first end of the main rope 8.

The elevator 1 also includes: a counterweight 10 that is coupled to a second end of the main rope 8; first and second car guide rails 14A and 14B that are disposed so as to extend vertically inside the hoistway 2 from a floor of a pit 2a to a vicinity of a ceiling, and that guide the car 15; a pair of counterweight guide rails 9A and 9B that are disposed so as to extend vertically inside the hoistway 2 from a floor of a pit 2a to a vicinity of the ceiling, and that guide the counterweight 10; landings 18 that are disposed on respective building floors; an elevator controlling board 4 that functions as a controlling means, that is disposed in the machine room 3, and that performs the operational control of the elevator 1; a car braking apparatus 20A that applies braking to the car 15 by engaging with the car guide rails 14A and 14B; and a remote braking release mechanism 50A that is configured so as to enable release of braking of the car 15 by the car braking apparatus 20A to be performed by remote control from the landings 18.

The elevator controlling board 4 has, for example: a read-only memory (ROM) (not shown) onto which has been written a program for controlling operation of the elevator 1; a central processing unit (CPU) (not shown) for controlling operation of the elevator 1 in accordance with the contents of that program; and a random-access memory (RAM) (not shown) that can be used as a working space and a temporary data storage area when the CPU computes.

In addition, the hoisting machine 5 has: a driving sheave 5a; and a motor 5b that generates torque that drives the driving sheave 5a to rotate, driving control of the motor 5b being performed by the elevator controlling board 4. The main rope 8 moves in response to the rotation of the driving sheave 5a, and the car 15 and the counterweight 10 are configured so as to ascend and descend inside the hoistway 2 interdependently with the rotation of the driving sheave 5a.

The first and second guide rails 14A and 14B are respectively disposed so as to extend such that longitudinal directions thereof are aligned vertically so as to have a predetermined clearance from respective car side walls 16b that are perpendicular to opening and closing directions of a car door 16a. Moreover, the opening and closing directions of the car door 16a constitute a width direction.

Next, details of the first car guide rail 14A will be explained.

The car guide rail 14A is formed so as to have a cross section perpendicular to its longitudinal direction that has a T shape, as also shown in Figure 2, and is disposed such that a projecting end of a second side of the T that is disposed so as to project from an intermediate portion in a longitudinal direction of a first side faces a car side wall 16b so as to have a car frame (not shown) interposed. Hereinafter, the second side of the T-shaped cross section of the car guide rail 14A will be called "a rail protruding portion 14a".

Moreover, although not shown, the second car guide rail 14B has a shape that is similar to that of the first car guide rail 14A, and a tip end of a rail protruding portion of the car guide rail 14B is disposed so as to face a car side wall 16c so as to have a car frame (not shown) interposed.

Car guide shoes 17 are fixed to main body portions 21A and 21 B that are disposed on lower portions of the car 15 and upper portions of the car 15 that are described in detail below so as to engage with the car guide rails 14A and 14B, and are configured such that the car 15 is guided by the car guide rails 14A and 14B as it moves.

The pair of counterweight guide rails 9A and 9B are respectively disposed so as to extend so as to have a predetermined clearance from respective first and second side walls of the counterweight 10.

Moreover, although not shown in detail, shapes of the counterweight guide rails 9A and 9B are similar to the shapes of the car guide rails 14A and 14B, rail protruding portions of the counterweight guide rails 9A and 9B and counterweight guide shoes (not shown) that are fixed to the counterweight 10 engage with each other, and are configured such that the counterweight 10 is guided by the counterweight guide rails 9A and 9B as it moves.

The car braking apparatus 20A includes: the main body portions 21A and 21 B, which are disposed on upper portions of the car 15 that correspond to positions of the car guide rail 14A and 14B; and the elevator controlling board 4.

Details of the main body portion 21A that is disposed on the upper portion of the car 15 that corresponds to the position of the first car guide rail 14A will now be explained.

In Figures 2 and 3, the main body portion 21A includes: a case 22 that is fixed to the upper portion of the car 15; first and second movable arms 23A and 23B that are supported by the case 22 so as to be pivotable around an axis of a pivoting shaft bolt 36 that functions as a coupling shaft that is fixed to the case 22, and that face each other throughout a direction of extension; and braking members 34a and 34b that are fixed near first ends the movable arms 23A and 23B so as to face each other.

In addition, the main body portion 21A includes: a coil spring 35 that functions as a forcing member that is disposed in a compressed state between the movable arms 23A and 23B so as to pivot the movable arms 23A and 23B in directions that move first ends of the movable arms 23A and 23B closer to each other; and an actuator 40 that generates an electromagnetic force that pivots the movable arms 23A and 23B so as to move second end portions of the movable arms 23A and 23B closer to each other in opposition to the force of the coil spring 35.

The case 22 is configured into a tubular body having a rectangular cross section, and is formed such that penetrating apertures 22a face each other on a parallel pair of wall portions among the wall portions that constitute the case 22.

The movable arms 23A and 23B are configured so as to have a similar shape and size using magnetic members. The first movable arm 23A has an intermediate portion 24A that is configured in a predetermined region between a first end portion and a second end portion in its direction of extension. The intermediate portion 24A is formed so as to extend in a direction that is approximately perpendicular to a thickness direction of the movable arms 23A and 23B relative to a coupled portion between first end portions and second end portions of the movable arms 23A and 23B. Moreover, the movable arm 23A extends approximately in a single direction at a predetermined thickness except for a portion at the intermediate portion 24A.

The second movable arm 23B has a shape that is similar to that of the first movable arm 23A, and has an intermediate portion 24B that is similar to that of the intermediate portion 24A. Hereinafter, the first ends and the second ends in the direction of extension of the movable arms 23A and 23B will simply be called the first ends and the second ends of the movable arms 23A and 23B.

Coupling apertures 24a are disposed through the intermediate portions 24A and 24B such that aperture directions are oriented in the thickness direction of the movable arms 23A and 23B. Moreover, the intermediate portions 24A and 24B are formed such that their positions are offset in the thickness direction of the movable arms 23A and 23B.

The movable arms 23A and 23B are inserted through the case 22 such that the first ends thereof are oriented in an identical direction, the intermediate portions 24A and 24B are stacked such that the coupling apertures 24a are positioned coaxially, and also such that the coupling apertures 24a are positioned so as to be coaxial with the penetrating apertures 22a. Here, the movable arms 23A and 23B face each other except at the intermediate portions 24A and 24B.

Hereinafter, facing wall surfaces of the movable arms 23A and 23B will be called inner surfaces of the movable arms 23A and 23B, and wall surfaces of the movable arms 23A and 23B on an opposite side from the inner surfaces of the movable arms 23A and 23B will be called outer surfaces of the movable arms 23A and 23B.

The pivoting shaft bolt 36 is inserted through the penetrating apertures 22a and the coupling apertures 24a in a loosely-fitted state, and is fastened to the case 22 by a nut 37 that is screwed together from a tip end of the pivoting shaft bolt 36. Thus, the intermediate portions 24A and 24B are linked by the pivoting shaft bolt 36, making the movable arms 23A and 23B pivotable around the axis of the pivoting shaft bolt 36. Here, when the respective first end portions of the movable arms 23A and 23B move toward or away from each other, the second end portions move toward or away from each other in opposite directions from the first ends.

Grooves 26a and 26b are formed so as to have a predetermined width and a predetermined depth on the inner surfaces of the movable arms 23A and 23B between the intermediate portions 24A and 24B and the second ends of the movable arms 23A and 23B.

Bolt insertion apertures 27a and 27b are disposed so as to pass through between bottom portions of the grooves 26a and 26b and the outer surfaces of the movable arms 23A and 23B such that aperture directions are oriented in a direction that is perpendicular to the thickness direction of the movable arms 23A and 23B.

Bolts 32a and 32b are inserted into the bolt insertion apertures 27a and 27b from sides near the outer surfaces of the movable arms 23A and 23B in a loosely-fitted state. Here, tip ends of shaft portions of the bolts 32a and 32b extend outward from the bolt insertion apertures 27a and 27b. Moreover, diameters of head portions of the bolts 32a and 32b are larger than diameters of the bolt insertion apertures 27a and 27b.

Disk-shaped bearing seats 33a and 33b are fixed to the tip ends of the bolts 32a and 32b.

The braking members 34a and 34b are fixed to inner surfaces near the first ends of the movable arms 23A and 23B so as to face each other.

In addition, mechanical power operating portions 30a and 30b are disposed so as to project from the second ends of the movable arms 23A and 23B so as to face each other. Moreover, the mechanical power operating portions 30a and 30b are disposed so as to project in a thickness direction of the movable arms 23A and 23B.

Screw-threaded apertures 31a and 31b are disposed so as to pass through the respective mechanical power operating portions 30a and 30b so as to face each other each other.

The actuator 40 includes: a core 41A through which a penetrating aperture 41a is disposed; and an electromagnetic coil 42 that is fixed to an inner peripheral surface of the penetrating aperture 41a so as to have an aperture direction that is aligned with an aperture direction of the penetrating aperture 41 a.

The core 41A is disposed between second end portions of the movable arms 23A and 23B such that the two openings of the penetrating aperture 41a face the bearing seats 33a and 33b, and is fixed to the case 22 using a fastening member, etc.

The elevator controlling board 4 is configured such that ON/OFF switching of passage of electric current to the electromagnetic coil 42 can be controlled, in other words, generation of electromagnetic force on the actuator 40 can be controlled.

In addition, the coil spring 35 is disposed in a compressed state between the bearing seats 33a and 33b, and forces the movable arms 23A and 23B so as to pivot the movable arms 23A and 23B in a direction of that moves the first end portions of the movable arms 23A and 23B closer to each other.

The actuator 40 is configured such that when an electric current is passed through the electromagnetic coil 42, an electromagnetic force is generated that moves the first end portions of the movable arms 23A and 23B away from each other in opposition to the force from the coil spring 35, and that moves the second end portions of the movable arms 23A and 23B closer to each other, and the electromagnetic force is de-energized when the passage of electric current to the electromagnetic coil 42 is interrupted.

A main body portion 21A that has been configured as described above is disposed on the upper portion of the car 15 such that an axial direction of the pivoting shaft bolt 36 is aligned vertically, and the first end portions of the first and second movable arms 23A and 23B face each other on opposite sides of the rail protruding portions 14a so as to have the braking members 34a and 34b interposed. In other words, the first end portions of the movable arms 23A and 23B are able to engage with the rail protruding portion 14a by means of the braking members 34a and 34b. The coil spring 35 forces the movable arms 23A and 23B in such a direction that the rail protruding portion 14a is held under pressure by the braking members 34a and 34b. Moreover, the case 22 is fixed firmly onto the upper portion of the car 15 using the car frame and an outer wall at the upper portion of the cage 16, etc.

The main body portion 21 B is configured in a similar manner to that of the main body portion 21A, and is disposed on the second car guide rail 14B in a similar manner to that of the main body portion 21A.

As shown in Figures 5 through 9, the remote braking release mechanism 50A includes: extended mechanical power transmitting wires 51A and 51 B that are configured so as to be coupleable to the first ends of the movable arms 23A and 23B of the main body portions 21A and 21 B; and a wire tension applying means 60 that functions as a wire pulling means that has a first end that is configured so as to be coupleable to second ends of the extended mechanical power transmitting wires 51A and 51 B that are coupled to the movable arms 23A and 23B, and that is configured such that a force can be applied to the movable arms 23A and 23B that pivots them around an axis of the pivoting shaft bolt 36 in a direction that moves the second end portions of the movable arms 23A and 23B closer to each other when coupled to the extended mechanical power transmitting wires 51A and 51B.

As shown in Figure 7, the extended mechanical power transmitting wires 51A and 51 B include: a tubular extended outer wire 52a; an extended inner wire 53a that is inserted through the extended outer wire 52a; and coupling mechanisms 54 that are mounted to two ends of the extended outer wire 52a, and through which the extended inner wire 53a is inserted.

The extended outer wire 52a is formed into a tubular shape in which a periphery of a steel wire that is wound spirally is covered by a resin or a fiber material. The extended inner wire 53a is configured so as to be slidable on an inner peripheral surface of the extended outer wire 52a.

The extended mechanical power transmitting wires 51A and 51 B that are configured in this manner have a similar configuration to commonly-known brake wires that are used in bicycle braking mechanisms, etc., and tensile force when the second ends of the extended inner wires 53a are pulled can be transmitted to the first ends of the extended inner wire 53a even in a state in which there are curved portions between the two ends, for example.

The coupling mechanisms 54 include: wire fixing portions 54a that are fixed to end portions of the extended outer wire 52a; and detachable portions 54b that are coupled in an interfitting state to an outer periphery of the wire fixing portion 54a, and through which the extended inner wire 53a is inserted. The detachable portions 54b are constituted by external threads that are configured so as to be rotatable around an axis of the extended outer wire 52a.

The detachable portion 54a at the first end portion of the extended outer wire 52a and the screw-threaded aperture 31 b of the mechanical power operating portion 30b can be fastened, and the first end of the extended outer wire 52a is configured so as to enable switching between coupling to the second end portion of the second movable arm 23B and release thereof.

A first end of the extended inner wire 53a that is disposed so as to extend from the first end of the extended outer wire 52a is coupleable to the first movable arm 23A using an inner wire fixing member 69a.

The inner wire fixing member 69a is configured so as to be able to engage and fix the end portion of the extended inner wire 53a and also so as to be fastenable to the screw-threaded aperture 31 a of the mechanical power operating portion 30a. In other words, coupling of the first end of the extended inner wire 53a to the second end portion of the movable arm 23A and release thereof are switchable.

As shown in Figures 8 and 9, the wire tension applying means 60 includes: a pivoting lever 61; a pivoting lever supporting body 65 that supports the pivoting lever 61; and an inner wire fixing member 69b.

The pivoting lever 61 is formed into an L shape, and a first side of the L shape constitutes a gripping arm 61 A. A second side of the L shape of the pivoting lever 61 constitutes an inner wire fixing arm 61B. A screw-threaded aperture 61 a is disposed so as to pass through between a portion of the pivoting lever 61 in the vicinity of the corner portion and a tip end of the inner wire fixing arm 61B.

The inner wire fixing member 69b is configured in a similar manner to that the inner wire fixing member 69a, and is configured so as to be able to engage and fix the end portions of the extended inner wires 53a and so as to be fastenable to the screw-threaded aperture 61a. in other words, coupling of the end portions of the extended inner wires 53a to the end portions of the inner wire fixing arm 61 B and release thereof are switchable.

The pivoting lever supporting body 65 includes: an outer wire fixing portion 66; a pair of pivoting shaft supporting portions 67 that are disposed so as to protrude from the outer wire fixing portion 66 so as to face each other; and a pivoting shaft 68 that has an axial direction that is oriented in a direction of separation of the pair of pivoting shaft supporting portions 67 and that is fixed to the pivoting shaft supporting portions 67.

Two ends of the pivoting shaft 68 are fixed to the pair of pivoting shaft supporting portions 67. The pivoting shaft 68 is passed through an intermediate portion of the pivoting lever 61 in a loosely-fitted state, and the pivoting lever 61 is pivotable around an axis of the pivoting shaft 68. Screw-threaded apertures 66a and 66b are formed on the outer wire fixing portion 66 so as to be able to screw together with the detachable portions 54b of the extended mechanical power transmitting wires 51A and 51B.

According to a wire tension applying means 60 that has been configured as described above, when the second ends of the extended outer wires 52a are coupled to the outer wire fixing portion 66, and the second ends of the extended inner wires 53a are coupled to the end portion of the inner wire fixing arm 61B, the pivoting lever 61 is pivotable in a direction that pulls out from the second ends of the extended outer wires 52a. In other words, the extended inner wires 53a can be pulled such that the second end portions of the extended inner wires 53a are pulled out from the second ends of the extended outer wires 52a.

Next, braking of the car 15 using the car braking apparatus 20A when the car braking apparatus 20A is normal will be explained.

When the car 15 is moved up or down, the elevator controlling board 4 switches on the passage of electric current to the electromagnetic coils 42 of the main body portions 21A and 21 B to generate electromagnetic attraction that pivots the movable arms 23A and 23B so as to move the second end portions of the movable arms 23A and 23B closer together in opposition to the force of the coil springs 35.

The braking members 34a and 34b at the first end portions of the movable arms 23A and 23B are thereby moved away from side surfaces of the rail protruding portions 14a, and the car 15 ascends and descends without braking being applied.

When the car 15 is brought to a landing 18 of a predetermined floor, the elevator controlling board 4 interrupts passage of electric current to the electromagnetic coils 42. Because the electric current that flows to the electromagnetic coils 42 is thereby reduced to zero, the electromagnetic attraction that moves the second end portions of the movable arms 23A and 23B closer together is also reduced to zero.

Here, when the force of the coil springs 35 becomes more dominant than the electromagnetic attraction that is generated by the actuators 40, the movable arms 23A and 23B pivot such that the respective first end portions move closer together. When the electromagnetic attraction from the actuators 40 is removed, the movable arms 23A and 23B grip the rail protruding portion 14a from opposite sides with a large pressing force by means of the braking members 34a and 34b, as shown in Figure 4. Thus, braking is applied to the car 15 by frictional force between the braking members 34a and 34b and the rail protruding portion 14a, and a stationary state of the car 15 is held stably.

Next, a method for releasing braking of the car 15 when an actuator 40 fails and unexpected braking has been applied to the car 15 will be explained.

If failure of an actuator 40 such as the wire of an electromagnetic coil 42 breaking, etc., occurs when the car 15 is ascending or descending, the braking members 34a and 34b are pressed against the rail protruding portion 14a due to the passage of electric current to the electromagnetic coil 42 being interrupted. In other words, the car 15 is stopped due to unexpected braking being applied thereto. The elevator controlling board 4 is configured such that if it is determined that the car 15 will not move up or down interdependently with the driving of the motor 5b, the driving of the motor 5b will be stopped, and raising and lowering of the car 15 will not be subsequently performed until maintenance personnel issue a controlling instruction. Here, let us assume that the car 15 has stopped at position that is other than a predetermined floor alignment position.

Maintenance personnel ready the remote braking release mechanism 50A on the nearest landing 18 of a floor above where the car 15 has stopped.

Next, the maintenance personnel take the first ends of the extended mechanical power transmitting wires 51A and 51 B and move from the landing 18 to the upper portion of the car 15.

Then, the maintenance personnel screw the detachable portion 54b at the first end of the extended mechanical power transmitting wire 51A into the screw-threaded aperture 31 b of the mechanical power operating portion 30b of the main body portion 21A from an opposite side to the movable arm 23A, and fasten the first end of the extended outer wire 52a to the mechanical power operating portion 30b of the movable arm 23B.

The maintenance personnel then insert the first end of the extended inner wire 53a that projects outward from the first end of the extended outer wire 52a into the screw-threaded aperture 31a of the mechanical power operating portions 30a. The first end of the extended inner wire 53a is fixed to the mechanical power operating portion 30a using the inner wire fixing member 69a.

The maintenance personnel similarly fix the first end portion of the extended mechanical power transmitting wires 51 B to the mechanical power operating portions 30a and 30b that are configured on the second end portion of the movable arms 23A and 23B on the main body portion 21B.

The maintenance personnel return to the landing 18, and screw the detachable portions 54b at the second end portions of the extended outer wires 52a of the extended mechanical power transmitting wires 51A and 51 B into the screw-threaded apertures 66a and 66b to fix the second ends of the extended outer wires 52a to the outer wire fixing portion 66. In addition, the second ends of the extended inner wires 53a of the extended mechanical power transmitting wires 51A and 51 B are fixed to the end portion of the inner wire fixing arm 61 B by the inner wire fixing member 69b.

At that point, the pivoting lever 61 is pivotable in the direction of arrow A in Figure 9, in other words, in a direction that pulls the second end portions of the extended inner wires 53a out from the second ends of the extended outer wires 52a that are fixed to the outer wire fixing portion 66 (hereinafter "the tension applying direction").

Moreover, the extended mechanical power transmitting wires 51A and 51 B are provided with enough play that the extending mechanical power transmitting wires 51A and 51 B will not extend in a straight line even if the car 15 is moved from its present stopped position to the landing 18 of the nearest floor below.

When the maintenance personnel pivot the pivoting lever 61 in the tension applying direction at the landing 18, the extended inner wires 53a of the extended mechanical power transmitting wires 51A and 51B are pulled such that the first end portions thereof move toward the movable arms 23B. Here, because the first end portions of the extended inner wires 53a are fixed to the mechanical power operating portions 30a that are configured on the second end portions of the movable arms 23A, the movable arms 23A and 23B of the main body portions 21A and 21 B pivot in such a direction that the second end portions of the movable arms 23A and 23B move closer together in opposition to the force of the coil springs 35. In other words, because the movable arms 23A and 23B pivot such that the first end portions of the movable arms 23A and 23B move away from each other, holding of the rail protruding portions 14a under pressure by the movable arms 23A and 23B is released as shown in Figure 10, releasing braking of the car 15.

When coupled to the main body portions 21A and 21 B of the car braking apparatus 20A in this manner, the remote braking release mechanism 50A is configured so as to enable a force that pivots movable arms 23A and 23B around an axis of the pivoting shaft bolt 36 in a direction that moves the second end portions of the first and second movable arms 23A and 23B closer to each other to be applied by operation from a landing 18.

In this state, other maintenance personnel, who are standing by in the machine room 3, enable the passengers to be moved to the landing 18 from inside the cage 16 by performing an operation that controls the elevator controlling board 4 so as to bring the car 15 to the nearest landing 18.

According to Embodiment 1, an elevator 1 includes a remote braking release mechanism 50A that is coupled to a car braking apparatus 20A, and applies a force that pivots first and second movable arms 23A and 23B around an axis of a pivoting shaft bolt 36 in a direction that moves second end portions of the movable arms 23A and 23B closer to each other by operation from a landing 18.

More specifically, the remote braking release mechanism 50A includes: extended mechanical power transmitting wires 51A and 51B that are constituted by: tubular extended outer wires 52a that are configured so as to enable first ends to be coupled to or uncoupled from second end portions of second movable arms 23B that face first movable arms 23A; and extended inner wires 53a that are inserted through the extended outer wires 52a so as to be slidable on inner peripheral surfaces of the extended outer wires 52a, and that are configured such that first ends that extend from the first ends of the extended outer wires 52a can be coupled to and uncoupled from second end portions of the first movable arms 23A; and a wire tension applying means 60 that is configured such that a first end is coupleable to second ends of the extended outer wires 52a that are coupled to the second movable arm 23B, and a force that pivots the first and second movable arms 23A and 23B around the axis of the pivoting shaft bolt 36 in a direction that moves the second end portions of movable arms 23A and 23B closer to each other can be applied by means of the extended mechanical power transmitting wires 51A and 51B by pulling the extended inner wires 53a in a direction in which the second ends of the extended inner wires 53a whose first ends are coupled to the first movable arms 23A are pulled out from the second ends of the extended outer wires 52a when coupled to the extended outer wires 52a.

Consequently, even if unexpected braking has been applied to the car 15 due to failure of an actuator 40, maintenance personnel can pivot the movable arms 23A and 23B in a direction in which the first end portions of the movable arms 23A and 23B are moved apart simply by moving to an upper portion of the car 15 and coupling the first end portions of the extended mechanical power transmitting wires 51A and 51 B to the second end portions of the movable arms 23A and 23B as described above, then moving to the landing 18 and pulling the second end portions of the extended inner wires 53a of the extended mechanical power transmitting wires 51A and 51B using the wire tension applying means 60. In other words, the maintenance personnel can easily disengage a state in which rail protruding portions 14a are held under pressure by the movable arms 23A and 23B by remote control from the landing 18 to release braking of the car 15.

Thus, because work that takes a long time such as replacement or repair of the actuators 40, countermeasures to prevent the car 15 from moving by itself, etc., is no longer required, and the passengers inside the cage 16 can be moved to the landing 18 promptly, passengers will no longer be placed in a state of anxiety for a long period of time.

Now, it is also conceivable that the driving sheave 5a could be rotated forcefully by increasing the rotational torque from the motor 5b when unexpected braking is applied to the car 15 to move the car 15 to the landing 18 while the braking is still applied to the car 15. However, in that case, the braking members 34a and 34b may seize on the rail protruding portion 14a due to frictional heat, making it impossible to move the car 15 to the landing 18 of the nearest floor. If the braking members 34a and 34b seize on the rail protruding portion 14a, a great deal of time will be required before the car 15 can be moved, placing the passengers in a state of further anxiety. Even if it were possible to move the car 15 to the landing 18, extensive repair or replacement of the guide rail 14A and 14B would be unavoidable because the rail protruding portion 14a would be damaged.

In Embodiment 1, because the car 15 can be moved to the landing 18 after first releasing the braking of the car 15 by the car braking apparatus 20A, the car can be moved to the landing 18 without inflicting damage to the car guide rails 14A and 14B.

Moreover, in Embodiment 1, the remote braking release mechanism 50A is explained as being readied by maintenance personnel when unexpected braking is applied to the car 15, but the remote braking release mechanism 50A may also be set up in advance on an upper portion of the car 15 in a state in which the first end portions of the extended mechanical power transmitting wires 51A and 51 B are mounted to second end portions of the movable arms 23A and 23B.

### Embodiment 2

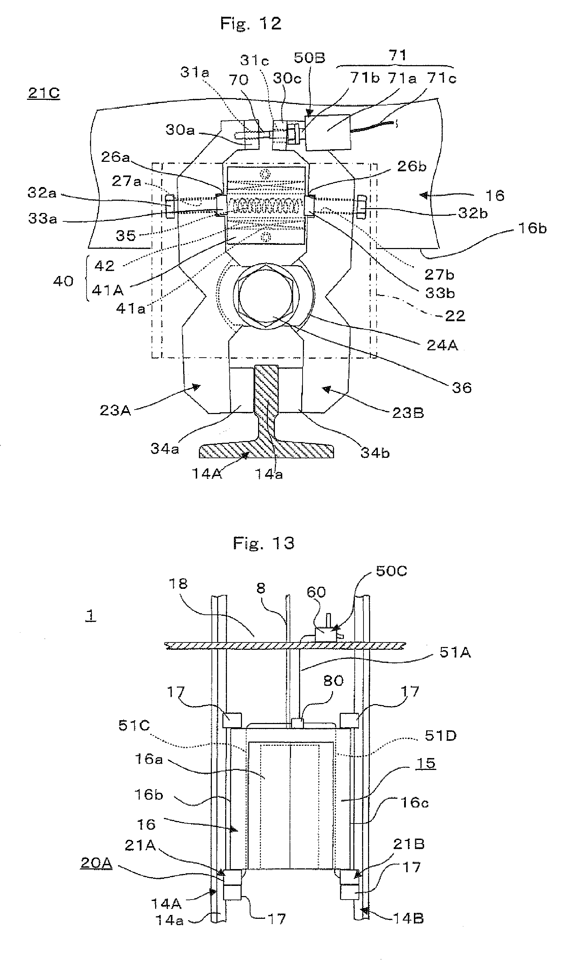

Figure 11 is a schematic diagram of an elevator according to Embodiment 2 not part of the present invention, and Figure 12 is a top plan of a vicinity of a car braking apparatus of the elevator according to Embodiment 2 of the present invention, and shows a state in which the remote braking release mechanism has been mounted to the car braking apparatus.

Moreover, in Figures 11 and 12, portions identical to or corresponding to those in Embodiment 1 above will be given identical numbering, and explanation thereof will be omitted.

In Figure 11, an elevator 1 includes: a car braking apparatus 20B that has main body portions 21 C and 21 D that are disposed on upper portions of a car 15 that correspond to positions of car guide rails 14A and 14B; and a remote braking release mechanism 50B for performing release of braking of the car 15 by the car braking apparatus 20B by remote control if an actuator 40 has failed.

Moreover, main body portions 21A and 21B, and a remote braking release mechanism 50A have been omitted.

Details of the main body portion 21 C that is disposed on the upper portion of the car 15 that corresponds to the position of the first car guide rail 14A will now be explained.

In Figures 11 and 12, the main body portion 21 C has a similar configuration to the main body portions 21A and 21B. However, a mechanical power operating portion 30c is disposed so as to project from a second end of a movable arm 23B so as to face a mechanical power operating portion 30a of a movable arm 23A instead of the mechanical power operating portion 30b of the main body portion 21 C. A penetrating aperture 31 c is formed on the mechanical power operating portion 30c so as to face a screw-threaded aperture 31 a.

The main body portion 21 D is also configured in a similar manner to that of the main body portion 21C.

The remote braking release mechanism 50B includes: motors 71 that are disposed on each of the main body portions 21C and 21D, and that have motor main body portions 71 a that generate rotational torque; mechanical power converting bolts 70 that function as a mechanical power converting means that are coupled to the first and second movable arms 23A and 23B, and that convert the rotational torque that is generated by the motor main body portions 71 a into motive forces that pivot the first and second movable arms 23A and 23B in directions that move second end portions of the first and second movable arms 23A and 23B closer to each other; an electric power source 72 for supplying electric power that drives the motor main body portions 71 a; and extended electric power source lines 71c that connect together the electric power source 72 and the motor main body portions 71 a.

Moreover, first ends of the extended electric power source lines 71 c are mounted to the motor main body portions 71a in advance to constitute portions of the motors 71, and the motors 71 further include driving shafts 71 b that project outward from the motor main body portions 71 a.

Shaft portions of the mechanical power converting bolts 70 are inserted through the penetrating apertures 31 c of second end portions of the movable arms 23B (the mechanical power operating portions 30c) in a loosely-fitted state, and mechanical power converting bolts 70 are screwed together with the screw-threaded apertures 31 a of the second end portions of the movable arms 23A (the mechanical power operating portions 30a). Here, head portions of the mechanical power converting bolts 70 are disposed so as to face the second end portions of the movable arms 23A so as to have the second end portions of the movable arms 23B interposed. Moreover, coupling between the mechanical power converting bolts 70 and the second end portions of the movable arms 23A and 23B can be released if the screwed-together state between the shaft portions of the mechanical power converting bolts 70 and the movable arms 23A is released.

The driving shafts 71 b are configured so as to be coaxially coupleable to the head portions of the mechanical power converting bolts 70, and the mechanical power converting bolts 70 are configured so as to rotate around their own axes interdependently with the driving of the motor main body portion 71a when the driving shafts 71b and the mechanical power converting bolts 70 are coupled.

Next, a method for releasing braking of the car 15 when an actuator 40 fails and unexpected braking has been applied to the car 15 will be explained.

Maintenance personnel ready the remote braking release mechanism 50B on the nearest landing 18 of a floor above where the car 15 has stopped.

The maintenance personnel take the mechanical power converting bolts 70 and the motors 71 and move onto the car 15. Moreover, ends of the extended electric power source lines 71c that connect to the electric power source 72 are left on the landing 18. In other words, ON/OFF switching of the electric power source supply from the electric power source 72 is controllable at the landing 18.

Next, the maintenance personnel mount a mechanical power converting bolt 70 and a motor main body portion 71 a to a second end portion of the movable arms 23A and 23B.

Specifically, the maintenance personnel insert the mechanical power converting bolt 70 through the penetrating aperture 31c of the mechanical power operating portion 30c from an opposite side to the movable arm 23A, and then screw the shaft portions of the mechanical power converting bolt 70 into the screw-threaded aperture 31a of the mechanical power operating portion 30a. In addition, the maintenance personnel fix the motor main body portion 71 a to the movable arm 23B by screwing the shaft portion of the mechanical power converting bolt 70 into the mechanical power operating portion 30a until the head portion of the mechanical power converting bolt 70 comes into contact with the mechanical power operating portion 30c of the movable arm 23B.

Moreover, the maintenance personnel similarly mount a mechanical power converting bolt 70 and a motor 71 to the second end portion of the movable arms 23A and 23B of the main body portion 21D.

Next, the maintenance personnel move to the nearest landing 18. The maintenance personnel then connect the extended electric power source lines 71 c and the electric power source 72, and supply electric power to the motor main body portions 71a to rotate the driving shafts 71b. Here, the directions of rotation of the driving shafts 71b are set to directions that screw the mechanical power converting bolts 70 into the screw-threaded apertures 31a. Because the tip ends of the mechanical power converting bolts 70 are screwed into the mechanical power operating portions 30a of the movable arms 23A, and the head portions of the mechanical power converting bolts 70 have been placed in contact with the mechanical power operating portions 30c of the movable arms 23B, torque from the mechanical power converting bolts 70 is converted to force that pivots the movable arms 23A and 23B such that the second end portions of the movable arms 23A and 23B are moved closer in opposition to the force of the coil springs 35.

Because the movable arms 23A and 23B thereby pivot such that second end portions thereof move closer together, holding of the rail protruding portions 14a under pressure by the braking members 34a and 34b is released, releasing braking of the car 15.

According to Embodiment 2, an elevator 1 includes: main body portions 21 C and 21 D that are disposed on upper portions of the car 15; and a remote braking release mechanism 50B that is coupled to a car braking apparatus 20A, and applies a force that pivots first and second movable arms 23A and 23B around an axis of a pivoting shaft bolt 36 in a direction that moves second end portions of the movable arms 23A and 23B closer to each other by operation from a landing 18.

Specifically, the remote braking release mechanism 50B includes: motors 71 that are disposed on each of the main body portions 21C and 21D, and that have motor main body portions 71a that generate rotational torque; mechanical power converting bolts 70 that are coupled to the first and second movable arms 23A and 23B, and that convert the rotational torque that is generated by the motor main body portions 71 a into a motive force that pivots the first and second movable arms 23A and 23B around axes of pivoting shaft bolts 36 in a direction that moves second end portions of the first and second movable arms 23A and 23B closer to each other; an electric power source 72 for supplying electric power that drives the motor main body portions 71 a; and extended electric power source lines 71 c that connect together the electric power source 72 and the motor main body portions 71 a.

Consequently, even if unexpected braking has been applied to the car 15 due to failure of an actuator 40, braking of the car 15 can be released by remote control from the landing 18 if the maintenance personnel move to the upper portion of the car 15, couple the mechanical power converting bolts 70 and the motors 71 to the movable arms 23A and 23B, and couple the electric power source 72 that is disposed on the landing 18 and the motor main body portions 71a using the extended electric power source lines 71c.

Thus, because work that takes a long time such as replacement or repair of the actuators 40, countermeasures to prevent the car 15 from moving by itself, etc., is no longer required, and the passengers inside the cage 16 can be moved to the landing 18 promptly, passengers will no longer be placed in a state of anxiety for a long period of time.

### Embodiment 3

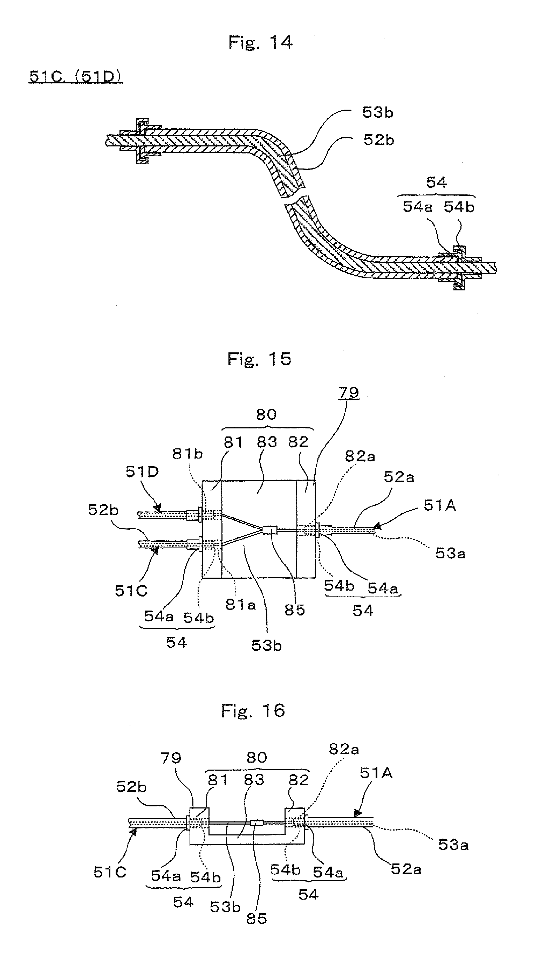

Figure 13 is a schematic diagram of an elevator according to Embodiment 3 not part of the present invention, Figure 14 is a cross section along a direction of extension of a car mechanical power transmitting wire of the elevator according to Embodiment 3 of the present invention, Figure 15 is a top plan of a wire coupling mechanism of a remote braking release mechanism of the elevator according to Embodiment 3 of the present invention, and Figure 16 is a front elevation of the wire coupling mechanism of the remote braking release mechanism of the elevator according to Embodiment 3 of the present invention.

Moreover, in Figures 13 through 16, portions identical to or corresponding to those in Embodiment 1 above will be given identical numbering, and explanation thereof will be omitted.

In Figures 13 through 16, an elevator 1 includes: a car braking apparatus 20A in which main body portions 21A and 21 B are disposed on lower portions of a car 15 that correspond to car guide rails 14A and 14B; and a remote braking release mechanism 50C for performing release of braking of the car 15 by the car braking apparatus 20A by remote control if an actuator 40 has failed.

The remote braking release mechanism 50C includes: car mechanical power transmitting wires 51C and 51 D that have first ends that are coupled to the respective main body portions 21A and 21 B, and second ends that are led to an upper portion of the car 15; an extended mechanical power transmitting wire 51A that is fixed to the upper portion of the car 15, and that has a first end that is configured so as to enable coupling to and uncoupling from the second ends of the car mechanical power transmitting wires 51C and 51 D using a wire coupling mechanism 79; and a wire tension applying means 60 that operates a second end portion of the extended mechanical power transmitting wire 51 A, and that is configured such that pivoting forces that pivot the movable arms 23A and 23B around axes of the pivoting shaft bolts 36 can be applied in directions that move second end portions of the first and second movable arms 23A and 23B closer to each other by means of the extended mechanical power transmitting wire 51A and the car mechanical power transmitting wires 51C and 51 D that are coupled to the wire coupling mechanism 79.

Moreover, an extended mechanical power transmitting wire 51 B is omitted.

As shown in Figure 14, the car mechanical power transmitting wires 51C and 51D include car outer wires 52b, car inner wires 53b, and coupling mechanisms 54.

Moreover, the car outer wires 52b and the car inner wires 53b have identical configurations to the extended outer wire 52a and the extended inner wire 53a, and the car inner wires 53b are inserted through the car outer wires 52b so as to be slidable on inner peripheral surfaces of the car outer wires 52b.

The coupling mechanisms 54 are mounted to two ends of the car outer wires 52b in a similar manner to being mounted to the two ends of the extended outer wires 52a.

The first end of the car mechanical power transmitting wire 51C is coupled to the second end portion of the movable arms 23A and 23B of the main body portion 21A in a similar manner to that explained using Figure 10 in Embodiment 1. Specifically, the first end of the car outer wire 52b is fixed to the second end portion of the second movable arm 23B that faces the first movable arm 23A, and the second end is disposed on the upper portion of the car 15. The car inner wire 53b is inserted through the car outer wire 52b so as to be slidable on the inner peripheral surface of the car outer wire 52b, and the first end of the car inner wire 53b, which is disposed so as to extend from the first end of the car outer wire 52b, is fixed to the second end portions of the first movable arm 23A.

Moreover, the first end of the car mechanical power transmitting wire 51 D is also coupled to the second end portions of the movable arms 23A and 23B of the main body portion 21B.

As shown in Figures 15 and 16, the wire coupling mechanism 79 includes: a wire coupling means 80 that is fixed to the upper portion of the car 15 in advance; and a coupling member 85.

The wire coupling means 80 includes: a bottom portion 83; and a first wire coupling portion 81 and a second wire coupling portion 82 that are disposed so as to project from the bottom portion 83 so as to face each other so as to leave a predetermined spacing.

Two screw-threaded apertures 81 a and 81 b are formed on the first wire coupling portion 81 so as to have aperture directions that are oriented in a direction of separation of the first wire coupling portion 81 and the second wire coupling portion 82. A screw-threaded aperture 82a is formed on the second wire coupling portion 82 so as to have an aperture direction that is oriented in the direction of separation of the first wire coupling portion 81 and the second wire coupling portion 82.

Detachable portions 54b at second end portions of the car mechanical power transmitting wires 51C and 51D can be screwed into the screw-threaded apertures 81 a and 81 b of the first wire coupling portion 81 from an opposite side to the second wire coupling portion 82, and the second ends of the car outer wires 52b and the first wire coupling portion 81 are configured so as to enable coupling and uncoupling. Second ends of the car inner wires 53b can be pulled out toward the second wire coupling portion 82 from the screw-threaded apertures 81 a and 81 b when the second ends of the car outer wires 52b and the first wire coupling portion 81 are coupled.

A detachable portion 54b at the first end of the extended mechanical power transmitting wire 51A can be screwed into the screw-threaded aperture 82a of the second wire coupling portion 82 from an opposite side to the first wire coupling portion 81, and the first end of the extended outer wire 52a and the second wire coupling portion 82 are configured so as to enable coupling and uncoupling. A first end of the extended inner wire 53a can be pulled out toward the first wire coupling portion 81 from the screw-threaded aperture 82a when the first end of the extended outer wire 52a and the second wire coupling portion 82 are coupled.

Thus, the first end of the extended inner wire 53a can be coupled to the second ends of the car inner wires 53b by means of the coupling member 85, which is configured so as to be able to screw together with each of the car inner wires 53b and the extended inner wire 53a.

To summarize the above, the first end of the extended outer wire 52a can be coupled and uncoupled to the second ends of the car outer wires 52b, and the first end of the extended inner wire 53a can be coupled and uncoupled to the second ends of the car inner wires 53b by the wire coupling mechanism 79.

Next, a method for releasing braking of the car 15 when an actuator 40 fails and unexpected braking has been applied to the car 15 will be explained.

Maintenance personnel ready the extended mechanical power transmitting wire 51A and the wire tension applying means 60 on the nearest landing 18 of a floor above where the car 15 has stopped.

Next, the maintenance personnel take a first end portion of the extended mechanical power transmitting wire 51A and move from the landing 18 to the upper portion of the car 15. The maintenance personnel then screw the detachable portion 54b at the first end portion of the extended mechanical power transmitting wire 51A into the screw-threaded aperture 82a to couple the first end of the extended outer wire 52a and the second wire coupling portion 82. The maintenance personnel also pull the first end of the extended inner wire 53a of the extended mechanical power transmitting wire 51A out through an opening on a side of the screw-threaded aperture 82a near the first wire coupling portion 81.

The second ends of the car inner wires 53b of the car mechanical power transmitting wire 51C and 51D and the first end of the extended inner wire 53a of the extended mechanical power transmitting wire 51A are then coupled and fixed using the coupling member 85.

The maintenance personnel return to the landing 18, and screw the detachable portion 54b at the second end portion of the extended outer wire 52a into the screw-threaded aperture 66a to fix the second end of the extended outer wire 52a to the outer wire fixing portion 66.

In addition, the second end of the extended inner wire 53a is fixed to the end portion of the inner wire fixing arm 61 B by the inner wire fixing member 69b.

When the maintenance personnel pivot the pivoting lever 61 in the tension applying direction at the landing 18, the car inner wires 53b of the car mechanical power transmitting wires 51 C and 51D are pulled such that the first end portions thereof move toward the movable arms 23B, in a similar manner to Embodiment 1. In other words, the force that is generated by the wire tension applying means 60 is transmitted to the movable arms 23A and 23B by means of the extended mechanical power transmitting wire 51A and the car mechanical power transmitting wires 51C and 51 D, and pivots the movable arms 23A and 23B such that the second end portions of the movable arms 23A and 23B move closer together. Holding of the rail protruding portions 14a under pressure by the movable arms 23A and 23B is thereby released, releasing the braking of the car 15.

According to Embodiment 3, an elevator 1 includes: a car braking apparatus 20A that has main body portions 21A and 21 B that are disposed on lower portions of a car 15; and a remote braking release mechanism 50C for performing release of braking of the car 15 by the car braking apparatus 20A by remote control if an actuator 40 has failed.

The remote braking release mechanism 50C includes: car mechanical power transmitting wires 51C and 51D that include: car outer wires 52b that have first ends that are fixed to second end portions of second movable arms 23B that face first movable arms 23A, and second ends that are disposed on an upper portion (a predetermined portion) of the car 15; and car inner wires 53b that have first ends that are disposed so as to extend from the first ends of the car outer wires 52b that are fixed to second end portions of the first movable arms 23A; and an extended mechanical power transmitting wire 51A that includes: an extended outer wire 52a that has a first end that is configured so as to enable coupling to and uncoupling from the second ends of the car outer wires 52b; and an extended inner wire 53a that has a first end that is configured so as to enable coupling to and uncoupling from the second ends of the car outer wires 52b.

The remote braking release mechanism 50C also includes a wire tension applying means 60 that can be coupled to a second end of the extended outer wire 52a, and that applies a force when coupled to the second end of the extended outer wire 52a that pivots the movable arms 23A and 23B around axes of pivoting shaft bolts 36 in directions that move the second end portions of the first and second movable arms 23A and 23B closer to each other by means of the extended mechanical power transmitting wire 51A and the car mechanical power transmitting wires 51 C and 51D by pulling the extended inner wire 53a in a direction that pulls a second end of the extended inner wire 53a whose first end is coupled to the car inner wires 53b out from a second end of the extended outer wire 52a whose first end is coupled to the car outer wires 52b.

Because the car outer wires 52b and the car inner wires 53b are disposed on the upper portion of the car 15 in advance, it is not necessary to lead the extended mechanical power transmitting wire 51A to the lower portions of the car 15, keeping work by the maintenance personnel at the upper portion of the car 15.

Moving to the upper portion of the car 15 is significantly easier than moving to the lower portion of the car 15, and maintenance personnel can complete the work in which the first end of the extended outer wire 52a is coupled to the wire coupling means 80 and the first end of the extended inner wires 53a is coupled to the second ends of the car inner wires 53b in a short amount of time.

The maintenance personnel can then pivot the movable arms 23A and 23B of the main body portions 21A and 21 B such that first end portions of the movable arms 23A and 23B are moved apart using the wire tension applying means 60, which is installed at the landing 18. Consequently, the maintenance personnel can release the braking of the car 15 easily by remote control from the landing 18.

Thus, because work that takes a long time such as replacement or repair of the actuators 40, countermeasures to prevent the car 15 from moving by itself, etc., is no longer required, and the passengers inside the cage 16 can be moved to the landing 18 promptly, passengers will no longer be placed in a state of anxiety for a long period of time.

### Embodiment 4

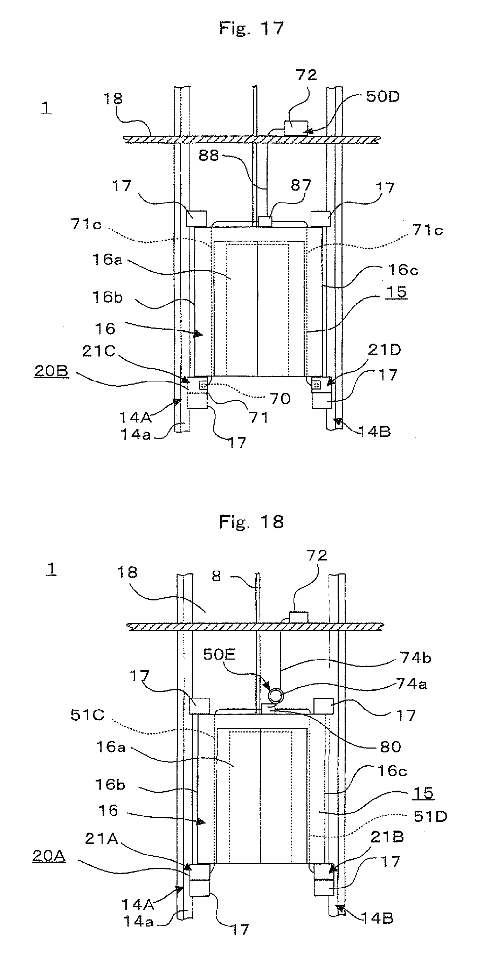

Figure 17 is a schematic diagram of an elevator according to Embodiment 4 not part of the present invention.

Moreover, in Figure 17, portions identical to or corresponding to those in the above embodiments will be given identical numbering, and explanation thereof will be omitted.

In Figure 17, an elevator 1 includes: a car braking apparatus 20B in which main body portions 21C and 21 D are disposed on lower portions of a car 15 that correspond to car guide rails 14A and 14B; and a remote braking release mechanism 50D for performing release of braking of the car 15 by the car braking apparatus 20B by remote control if an actuator 40 has failed.

The remote braking release mechanism 50D includes: mechanical power converting bolts 70 that are coupled to movable arms 23A and 23B of the respective main body portions 21C and 21 D; motors 71 that have motor main body portions 71a that are coupled to the mechanical power converting bolts 70 so as to rotate the mechanical power converting bolts 70 around axes; and car electric power source lines 71d that have first ends that are connected to the motors 71, and second ends that are supported by the car 15 so as to be disposed on an upper portion (a predetermined portion) of the car 15. The remote braking release mechanism 50D also includes: an identical electric potential distributing and supplying means 87 that is fixed to the upper portion of the car 15, and to which the car electric power source lines 71d that are led to the upper portion of the car 15 are each connected; an electric power source 72 that generates electric power that drives the motor main body portions 71 a; and an extended electric power source line 88 that has a first end that can be coupled to the car electric power source lines 71d by means of the identical electric potential distributing and supplying means 87, and a second end that is configured so as to be coupleable to the electric power source 72.

Moreover, the first ends of the car electric power source lines 71d are mounted to the motor main body portions 71 a in advance to constitute portions of the motors 71. Disposal of the extended electric power source lines 71c of the motors 71 is also omitted.

The mechanical power converting bolts 70 and the motor main body portions 71 a are mounted to second end portions of the first and second movable arms 23A and 23B in advance in a similar manner to the explanation in Embodiment 2 above (see Figure 12).

The identical electric potential distributing and supplying means 87 includes an input terminal (not shown), and is configured such that electric power that is input into the input terminal is output to the two car electric power source lines 71d.

Next, a method for releasing braking of the car 15 when an actuator 40 fails and unexpected braking of the car 15 has occurred will be explained.

Maintenance personnel ready the electric power source 72 and the extended electric power source line 88 on the nearest landing 18 of a floor above where the car 15 has stopped, take the first end of the extended electric power source line 88 and move to the upper portion of the car 15. Moreover, the second end of the extended electric power source line 88 is connected in advance to an output terminal of the electric power source 72.

The maintenance personnel then return to the nearest landing 18 after the first end of the extended electric power source line 88 has been connected to the input terminal of the identical electric potential distributing and supplying means 87.

Because the electric power source 72 is installed on the landing 18, ON/OFF switching of output of electric power (electric power supply) can be controlled from the landing 18.

The maintenance personnel then switch on the output of electric power of the electric power source 72 to supply electric power to the motors 71 to rotate the mechanical power converting bolts 70. Thereafter, the movable arms 23A and 23B of the main body portions 21C and 21D pivot in opposition to the force of coil springs 35 so as to move the second end portions of the movable arms 23A and 23B closer together in a similar manner to Embodiment 2. Because holding of the rail protruding portions 14a under pressure by braking members 34a and 34b is thereby released, braking of the car 15 is released.

According to Embodiment 4, a remote braking release mechanism 50D of an elevator 1 includes: mechanical power converting bolts 70 that are configured such that head portions face second end portions of second movable arms 23B so as to have first movable arms 23A interposed, and such that shaft portions can be screwed into second end portions of the first movable arms 23A; motor main body portions 71a that are coupled to the mechanical power converting bolts 70 so as to rotate the mechanical power converting bolts 70 that are screwed into the first movable arms 23A around axes; car electric power source lines 71d that have first ends that are coupled to the motor main body portions 71 a, and second ends that are supported by the car 15 so that be disposed on an upper portion of the car 15; an electric power source 72 that generates electric power that drives the motor main body portions 71 a; and an extended electric power source line 88 that is configured so as to be coupleable with the electric power source 72 and the second ends of the car electric power source lines 71d. The electric power source 72 is configured so as to enable control of ON/OFF switching of an electric power supply from the landing 18.

Because the second ends of the car electric power source lines 71 d are disposed on the upper portion of the car 15, it is not necessary to lead the extended electric power source line 88 to the lower portions of the car 15, keeping work by the maintenance personnel at the upper portion of the car 15.

Moving to the upper portion of the car 15 is significantly easier than moving to the lower portion of the car 15, and maintenance personnel can perform the work in which the first end of the extended electric power source line 88 is coupled to the identical electric potential distributing and supplying means 87 in a short amount of time.

If the maintenance personnel then mount the second end of the extended electric power source line 88 to the electric power source 72 that is installed on the landing 18 and supply electric power to the motor main body portions 71a, the movable arms 23A and 23B pivot interdependently with the rotation of the mechanical power converting bolts 70 such that first end portions of the movable arms 23A and 23B are moved apart. The maintenance personnel can thereby release the braking of the car 15 easily by remote control from the landing 18.

Thus, because work that takes a long time such as replacement or repair of the actuators 40, countermeasures to prevent the car 15 from moving by itself, etc., is no longer required, and the passengers inside the cage 16 can be moved to the landing 18 promptly, passengers will no longer be placed in a state of anxiety for a long period of time.

Moreover, connection between the car electric power source lines 71d and the extended electric power source line 88 is explained as being performed using the identical electric potential distributing and supplying means 87, but connection between the car electric power source lines 71 d and the extended electric power source line 88 is not limited to using the identical electric potential distributing and supplying means 87, and may also be performed by soldering, etc.

The second ends of the car electric power source lines 71 d are explained as being supported by the car 15 so as to be disposed on the upper portion of the car 15, but may also be disposed on upper end portions of car side walls 16b and 16c, for example.

In addition, if a switch (not shown) that switches over the electric power supply of the electric power source 72 is disposed on the landing 18, the electric power source 72 can also be disposed on the upper portion of the car 15 in advance.

### Embodiment 5

Figure 18 is a schematic diagram of an elevator according to Embodiment 5 not part of the present invention.

Moreover, in Figure 18, portions identical to or corresponding to those in the above embodiments will be given identical numbering, and explanation thereof will be omitted.

In Figure 18, an elevator 1 includes: a car braking apparatus 20Athat has main body portions 21A and 21 B that are disposed on lower portions of a car 15 that correspond to positions of car guide rails 14A and 14B; and a remote braking release mechanism 50E for performing release of braking of the car 15 by the car braking apparatus 20A by remote control if an actuator 40 has failed.

The remote braking release mechanism 50E includes: car mechanical power transmitting wires 51C and 51 D that include: tubular car outer wires 52b that have first ends that are fixed to second end portions of second movable arms 23B that face first movable arms 23A, and second ends that are disposed on a predetermined portion of the car 15; and car inner wires 53b that are inserted through the car outer wires 52b so as to be slidable on inner peripheral surfaces of the car outer wires 52b, that have first ends that are disposed so as to extend from the first ends of the car outer wires 52b that are fixed to second end portions of the first movable arms 23A; a compact hoisting machine 74 that has a reeling main body portion 74a that functions as a wire pulling means that is configured so as to enable coupling to and uncoupling from the second ends of the car inner wires 53b, and that reels in the car inner wires 53b; an electric power source 72 that supplies electric power that drives the reeling main body portion 74a; and an extended electric power source line 74b for supplying the electric power from the electric power source 72 to the reeling main body portion 74a that couples to the electric power source 72 and the reeling main body portion 74a.

The first ends of the car mechanical power transmitting wires 51 C and 51 D are mounted to the second end portions of the first and second movable arms 23A and 23B of each of the main body portions 21A and 21 B in a similar manner to the extended mechanical power transmitting wires 51A and 51B in Embodiment 1.

A first end of the extended electric power source line 74b is mounted to the reeling main body portion 74a in advance to serve also as a portion of the compact hoisting machine 74.

Next, a method for releasing braking of the car 15 when an actuator 40 fails and unexpected braking of the car 15 has occurred will be explained.

Maintenance personnel ready the compact hoisting machine 74 and the electric power source 72 on the nearest landing 18 of a floor above where the car 15 has stopped.

The maintenance personnel then take the reeling main body portion 74a and move to the upper portion of the car 15. Moreover, the extended electric power source line 74b is connected in advance to the electric power source 72 that is installed near the landing 18. Moreover, because the electric power source 72 is disposed on the landing 18, ON/OFF switching of the electric power supply can be controlled from the landing 18.

Second end portions of the car inner wires 53b of the car mechanical power transmitting wires 51C and 51 D are then fixed around a circumference of the reeling portion of the reeling main body portion 74a such that the car inner wires 53b in question can be reeled in.

The maintenance personnel then return to the landing 18, and switch on the output from the electric power source 72 to rotate the reeling portion of the reeling main body portion 74a of the compact hoisting machine 74. Here, the reeling portion of the reeling main body portion 74a is configured so as to rotate in a direction that reels in the second end portions of the car inner wires 53b of the car mechanical power transmitting wires 51C and 51 D.

The first end portions of the car inner wires 53b of the car mechanical power transmitting wires 51C and 51 D are pulled so as to move toward the movable arms 23B in a similar manner to that shown in Figure 10, and the movable arms 23A and 23B of the main body portions 21A and 21 B pivot in a direction in which the first end portions of the movable arms 23A and 23B are moved apart. Holding of the rail protruding portions 14a under pressure by the movable arms 23A and 23B is thereby released, releasing the braking of the car 15.

In this state, the maintenance personnel stop the rotation of the reeling portion of the reeling main body portion 74a, and other maintenance personnel, who are standing by in the machine room 3, enable the passengers to be moved to the landing 18 from inside the cage 16 by performing an operation that controls the elevator controlling board 4 so as to bring the car 15 to the nearest landing 18.

According to Embodiment 5, an elevator 1 includes a remote braking release mechanism 50E that includes: car mechanical power transmitting wires 51C and 51D that include: tubular car outer wires 52b that have first ends that are fixed to second end portions of second movable arms 23B that face first movable arms 23A, and second ends that are disposed on a predetermined portion of the car 15; and car inner wires 53b that are inserted through the car outer wires 52b so as to be slidable on inner peripheral surfaces of the car outer wires 52b, that have first ends that are disposed so as to extend from the first ends of the car outer wires 52b that are fixed to second end portions of the first movable arms 23A; a compact hoisting machine 74 that has a reeling main body portion 74a that is configured so as to enable coupling to and uncoupling from the second ends of the car inner wires 53b, and that reels in the car inner wires 53b; an electric power source 72 that supplies electric power that drives the reeling main body portion 74a; and an extended electric power source line 74b for coupling to the electric power source 72 and the reeling main body portion 74a.

Consequently, because the second ends of the car mechanical power transmitting wires 51C and 51D are disposed on the upper portion of the car 15, the maintenance personnel can fix the second ends of the car mechanical power transmitting wires 51C and 51 D to the reeling portion of the reeling main body portion 74a of the compact hoisting machine 74 on the upper portion of the car 15 so as to enable reeling in when unexpected braking has been applied to the car 15 due to failure of an actuator 40.

The maintenance personnel can then release the braking of the car 15 by the car braking apparatus 20A by remote control if electric power from the electric power source 72 is supplied to the compact hoisting machine 74 by means of the extended electric power source line 74b of the compact hoisting machine 74 that is extended to the landing 18.

Moving to the upper portion of the car 15 is significantly easier than moving to the lower portion of the car 15, and the maintenance personnel can release the braking of the car 15 by the car braking apparatus 20A in a short amount of time.

Thus, because work that takes a long time such as replacement or repair of the actuators 40, countermeasures to prevent the car 15 from moving by itself, etc., is no longer required, and the passengers inside the cage 16 can be moved to the landing 18 promptly, passengers will no longer be placed in a state of anxiety for a long period of time.

Moreover, in Embodiment 5, the remote braking release mechanism 50E is explained as being made ready when unexpected braking has been applied to the car 15 when failure of the actuator 40 has occurred, but the compact hoisting machine 74 may also be set up on the upper portion of the car 15 in advance.

### Embodiment 6

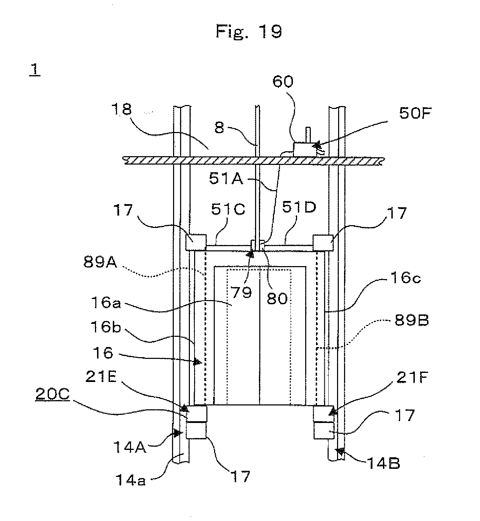

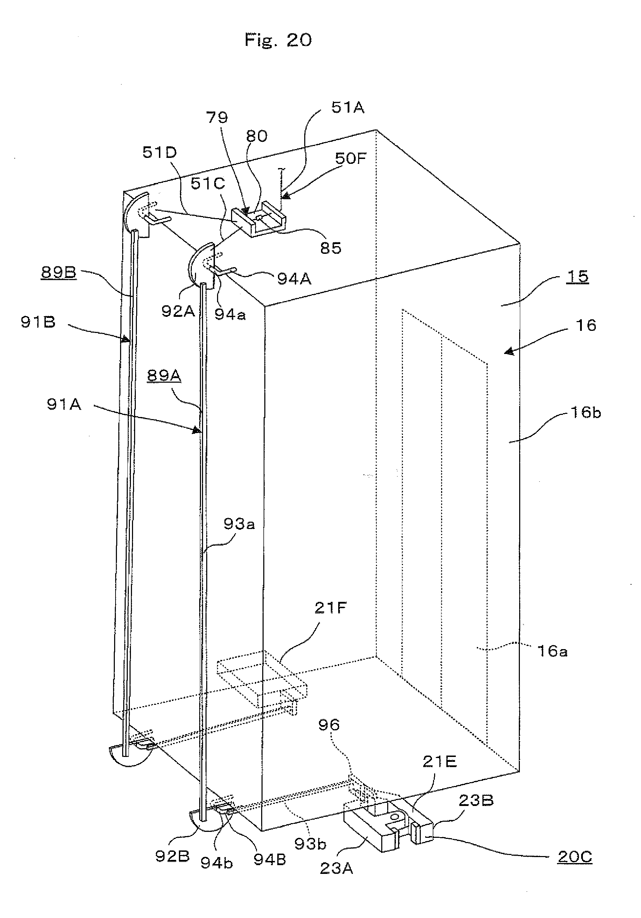

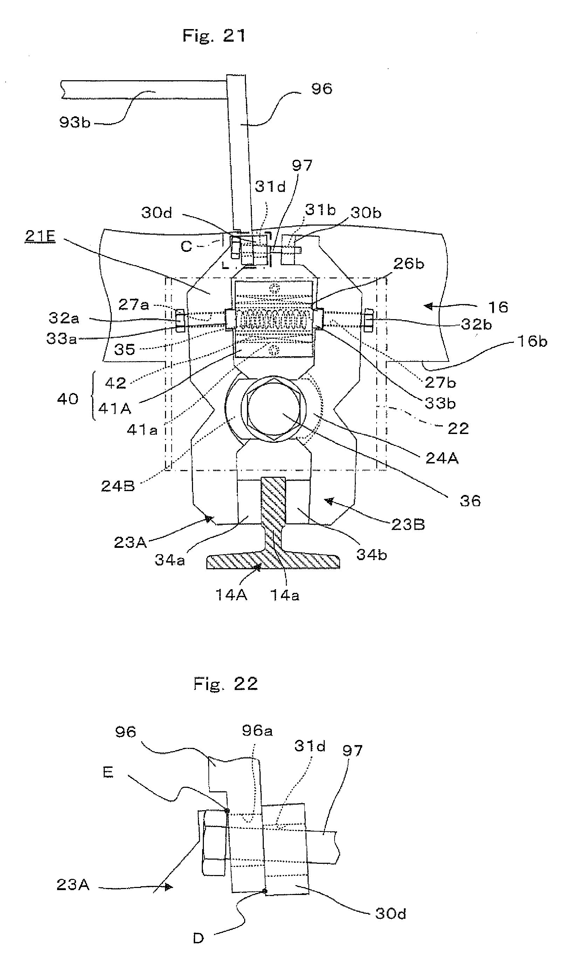

Figure 19 is a schematic diagram of an elevator according to Embodiment 6 not part of the present invention, Figure 20 is a perspective of a vicinity of a car of the elevator according to Embodiment 6 of the present invention, Figure 21 is a top plan of a car braking apparatus of the elevator according to Embodiment 6 of the present invention, and Figure 22 is an enlargement of portion C in Figure 20.

Moreover, in Figure 20, one of a pair of main body portions that are fixed to lower portions of the car is depicted in an abbreviated form.

In Figures 19 through 22, portions identical to or corresponding to those in the above embodiments will be given identical numbering, and explanation thereof will be omitted.

In Figures 19 through 22, an elevator 1 includes: a car braking apparatus 20C that has main body portions 21 E and 21 F that are disposed on lower portions of a car 15 that correspond to positions of car guide rails 14A and 14B; and a remote braking release mechanism 50F that is configured so as to enable release of braking of the car 15 by the car braking apparatus 20C to be performed by remote control from a landing 18.

A mechanical power operating portion 30d is disposed so as to project from a second end of a movable arm 23A of the main body portion 21 E so as to face a mechanical power operating portion 30b of a movable arm 23B. A penetrating aperture 31 d is disposed through the mechanical power operating portion 30d so as to face a screw-threaded aperture 31 b of the mechanical power operating portion 30b. Moreover, a mechanical power operating portion 30a has been omitted.

Configuration of the main body portion 21 F is similar to that of the main body portion 21 E.

The remote braking release mechanism 50F includes: mechanical power transmitting bolts 97 and pivoting plates 96 that are disposed on the movable arms 23A and 23B of the main body portions 21 E and 21 F; pivoting force transmitting means 89A and 89B that are coupled to the pivoting plates 96, and that transmit pivoting forces that pivot the pivoting plates 96; and a pivoting force generating means 55 that is configured so as to enable coupling to and uncoupling from the pivoting force transmitting means 89A and 89B, and that can generate a pivoting force that pivots the pivoting plates 96 when coupled to the pivoting force transmitting means 89A and 89B.

Head portions of the mechanical power transmitting bolts 97 face the second end portions of the second movable arms 23B of the main body portions 21 E and 21 F so as to have the second end portions of the first movable arms 23A interposed. Shaft portions of the mechanical power transmitting bolts 97 are inserted through penetrating apertures 96a that are formed on the first end of the pivoting plates 96 and the penetrating apertures 31 d in a loosely-fitted state and are screwed into the screw-threaded apertures 31b. In other words, the shaft portions of the mechanical power transmitting bolts 97 are inserted through the first movable arms 23A in a loosely-fitted state and are screwed into the second end portions of the second movable arms 23B.

First end portions of the pivoting plates 96 are interposed between the head portions of the mechanical power transmitting bolts 97 and the second end portions of the movable arms 23A. Second end portions of the pivoting plates 96 project outward from the movable arms 23A, and first ends of the pivoting plates 96 are pivotable in such a direction that the second end portions move away from the second movable arms 23B such that portions that contact the movable arms 23A act as pivoting points.

The pivoting force transmitting means 89A includes: a linking mechanism 91A that has a first end that is coupled to a second end of the pivoting plate 96 that is disposed on the main body portion 21 E, and a second end that is disposed on an upper portion of the car 15; and a car mechanical power transmitting wire 51C that has a first end that is coupled to a second end portion of the linking mechanism 91A, and a second end that is disposed on an upper portion of the car 15.

The pivoting force transmitting means 89B includes: a linking mechanism 91 B that has a first end that is coupled to a second end of the pivoting plate 96 that is disposed on the main body portion 21F, and a second end that is disposed on an upper portion of the car 15; and a car mechanical power transmitting wire 51 D that has a first end that is coupled to a second end portion of the linking mechanism 91 B, and a second end that is disposed on an upper portion of the car 15.

A wire coupling means 80 of a wire coupling mechanism 79 is also fixed to an upper portion of the car 15, and second ends of the car outer wires 52b of the car mechanical power transmitting wires 51C and 51D are coupled to the wire coupling means 80.

As shown in Figure 20, the linking mechanism 91A includes: pivoting shaft members 94A and 94B that have pivoting shafts 94a and 94b that have axial directions that are oriented in a width direction, the pivoting shaft members 94A and 94B being fixed to an upper portion and a lower portion on an opposite side of the car 15 from a car door 16a; semicircular pivoting members 92A and 92B that are disposed so as to be rotatable around axes of the pivoting shafts 94a and 94b; a first linking rod 93a that connects the pivoting members 92A and 92B to each other; and a second linking rod 93b that connects the second end of the pivoting plate 96 and the pivoting member 92B.

The pivoting member 92B is positioned directly below the pivoting member 92A, and front and rear surfaces of the pivoting members 92A and 92B are approximately perpendicular to the width direction. The pivoting shafts 94a and 94b pass through portions in a vicinity of longitudinal centers of straight portions of the pivoting members 92A and 92B.

The first end of the car mechanical power transmitting wire 51C and an upper end of the first linking rod 93a are coupled to the pivoting member 92A. Here, the first linking rod 93a is coupled to the pivoting member 92A so as to be pivotable around a shaft pin (not shown) that is disposed so as to protrude from a first surface of the pivoting member 92A. The pivoting shaft 94a is positioned between the first end of the car mechanical power transmitting wire 51C and the upper end of the first linking rod 93a in a vertical direction.

A second end of the second linking rod 93b is coupled to the second end of the pivoting plate 96. A lower end of the first linking rod 93a and the second end of the second linking rod 93b are coupled to the pivoting member 92B. Here, the second linking rod 93b is coupled to the pivoting member 92B so as to be pivotable around a shaft pin (not shown) that is disposed so as to protrude from a first surface of the pivoting member 92B. The pivoting shaft 94b is positioned between the lower end of the first linking rod 93a and the second end of the second linking rod 93b in a depth direction that is perpendicular to the width direction and horizontal.

The pivoting force transmitting means 89B has a similar configuration to the pivoting force transmitting means 89A, and is coupled to the pivoting plate 96 of the main body portion 21 F in a similar manner to the pivoting force transmitting means 89A.

The pivoting force generating means 55 is constituted by a wire tension applying means 60 and an extended mechanical power transmitting wire 51A, and a first end of the extended mechanical power transmitting wire 51A is switchable between being coupled to the car mechanical power transmitting wires 51C and 51 D by the wire coupling mechanism 79 and being released therefrom.

When coupled to the second ends of the pivoting force transmitting means 89A and 89B by means of the wire coupling means 80, the pivoting force generating means 55 can generate a pivoting force that pivots the pivoting plates 96 so as to move in a direction in which the second ends of the pivoting plates 96 move away from the second movable arms 23B by means of the car mechanical power transmitting wires 51C and 51 D and the linking mechanisms 91A and 91 B by pulling the extended inner wire 53a in a direction that pulls the second end of the extended inner wire 53a out.

Next, a method for releasing braking of the car 15 when an actuator 40 fails and unexpected braking of the car 15 has occurred will be explained.

Maintenance personnel ready the extended mechanical power transmitting wire 51A and the wire tension applying means 60, and take a first end portion of the extended mechanical power transmitting wire 51A and move to the upper portion of the car 15. The maintenance personnel then couple the extended outer wire 52a to the wire coupling means 80, and couple the second ends of the car inner wires 53b of the car mechanical power transmitting wire 51C and 51 D and the first end of the extended inner wire 53a using the coupling member 85.

The maintenance personnel return to the landing 18, fix the second end of the extended outer wire 52a of the extended mechanical power transmitting wire 51A to the outer wire fixing portion 66, and fix the second end of the extended inner wire 53a to an end portion of an inner wire fixing arm 61 B using an inner wire fixing member 69b (see Figure 8).

At that point, the pivoting lever 61 is pivotable in the tension applying direction that pulls the second end portion of the extended inner wire 53a out from the second end of the extended outer wires 52a that is fixed to the outer wire fixing portion 66.

The maintenance personnel pivot the pivoting lever 61 in the tension applying direction at the landing 18. The extended inner wire 53a of the extended mechanical power transmitting wire 51A is thereby pulled in a direction in which the first end portion is pulled out from the first end portion of the extended outer wire 52a, and the car inner wires 53b of the car mechanical power transmitting wire 51C and 51D are also pulled in a direction in which the second ends of the car outer wires 52b are pulled out interdependently therewith. The pivoting member 92A then pivots in a direction that raises the upper end of the first linking rod 93a in Figure 20. The pivoting member 92B then pivots in a direction that moves the second linking rod 93b away from the car door 16a in the depth direction interdependently with the pulling up of the first linking rod 93a.

The pivoting plate 96 thereby pivots with a contacting portion D between the first longitudinal end thereof and the mechanical power operating portion 30d acts as a pivoting point such that the second longitudinal end of the pivoting plate 96 moves away from the movable arm 23B, as shown in Figure 22.

Here, a force that pulls the mechanical power transmitting bolt 97 out from the pivoting plate 96 through the penetrating aperture 96a acts on a portion E of the head portion of the mechanical power transmitting bolt 97 that comes into contact with the pivoting plate 96.

Because the shaft portion of the mechanical power transmitting bolt 97, which has been inserted through the penetrating aperture 31 d of the mechanical power operating portion 30d in a loosely-fitted state, has been screwed into the movable arm 23B, the movable arms 23A and 23B pivot such that second end portions move closer together.

In other words, because the movable arms 23A and 23B pivot such that first end portions thereof move away from each other, and holding of the rail protruding portion 14a under pressure by the movable arms 23A and 23B is released, braking of the car 15 is released.

According to Embodiment 6, an elevator 1 includes a remote braking release mechanism 50F that has: mechanical power transmitting bolts 97 that have head portions that face second end portions of second movable arms 23B so as to have second end portions of first movable arm 23A interposed, and shaft portions that are inserted through the first movable arms 23A in a loosely-fitted state and are screwed into the second end portions of the second movable arm 23B; pivoting plates 96 that have first end portions that are interposed between the head portions of the mechanical power transmitting bolts 97 and the first movable arms 23A, and that have second end portions that project outward from the first movable arms 23A, and that can pivot in a direction in which the second end portions move away from the second movable arms 23B such that contacting portions between first ends and the first movable arms 23A act as pivoting points; pivoting force transmitting means 89A and 89B that have first ends that are coupled to the second end portions of the pivoting plates 96, that have second ends that are disposed on upper portions of a car 15, and that are configured so as to enable a pivoting force that pivots the pivoting plates 96 to be transmitted to the pivoting plates 96; and a pivoting force generating means 55 that is configured so as to enable coupling to and uncoupling from the second ends of the pivoting force transmitting means 89A and 89B, and that generates a pivoting force that pivots the pivoting plates 96 such that the second ends of the pivoting plates 96 move away from the second movable arms 23B by operation from a landing 18 when coupled to the pivoting force transmitting means 89A and 89B.

Car outer wires 52b of car mechanical power transmitting wires 51C and 51 D of the pivoting force transmitting means 89A and 89B are coupled to a wire coupling means 80 that is fixed to an upper portion of the car 15. Consequently, it is no longer necessary to lead the extended mechanical power transmitting wire 51A to the lower portions of the car 15, keeping work by the maintenance personnel at the upper portion of the car 15.

Moving to the upper portion of the car 15 is significantly easier than moving to the lower portion of the car 15, and maintenance personnel can complete the work in which the first end of the extended outer wire 52a is coupled to the wire coupling means 80 and the first end of the extended inner wires 53a is coupled to the second ends of the car inner wires 53b in a short amount of time.

The pulling force of the pivoting force generating means 55 that arises when the second end portion of the extended inner wire 53a is pulled so as to pull out from the extended outer wire 52a acts as a pivoting force that pivots the pivoting plates 96 such that the second ends of the pivoting plates 96 move away from the second movable arms 23B by means of the car mechanical power transmitting wires 51C and 51D and the linking mechanisms 91A and 91B.

Consequently, the maintenance personnel can release the braking of the car 15 easily by remote control from the landing 18.

Thus, because work that takes a long time such as replacement or repair of the actuators 40, countermeasures to prevent the car 15 from moving by itself, etc., is no longer required, and the passengers inside the cage 16 can be moved to the landing 18 promptly, passengers will no longer be placed in a state of anxiety for a long period of time.

### Embodiment 7

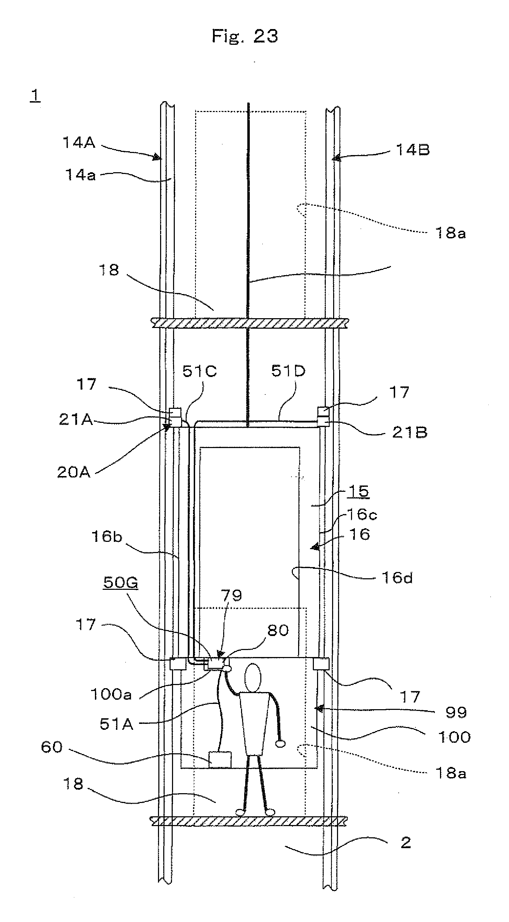

Figure 23 is a schematic diagram of an elevator according to Embodiment 7 not part of the present invention.

Moreover, in Figure 23, to facilitate explanation, depiction of building walls that form a hoistway is omitted, and a landing doorway is depicted by dotted lines.

Portions identical to or corresponding to those in the above embodiments will be given identical numbering, and explanation thereof will be omitted.

In Figure 23, an elevator 1 includes: a car braking apparatus 20A in which main body portions 21A and 21 B are disposed on upper portions of a car 15 that correspond to car guide rails 14A and 14B; and a remote braking release mechanism 50G for performing release of braking of the car 15 by the car braking apparatus 20A by remote control if an actuator 40 has failed.

The elevator 1 also includes an apron 99 that has protecting plates 100 that are disposed on a lower portion of a car 15 near a car doorway 16d such that a plurality thereof can be stacked and so as to enable sliding movement, and that are configured such that an amount of projection from a lower portion of a cage 16 is adjustable by the sliding movement.

The remote braking release mechanism 50G includes: car mechanical power transmitting wires 51C and 51D that are constituted by car outer wires 52b and car inner wires 53b that have first ends that are coupled to the main body portions 21A and 21 B, and second ends that are led to a lower portion of the car 15 near a landing 18; and a wire coupling mechanism 79 that has a wire coupling means 80 that is fixed to the lower portion of the car 15 near the landing 18, and to which the second ends of the car outer wires 52b of the car mechanical power transmitting wire 51C and 51 D are coupled.

The remote braking release mechanism 50G also includes: an extended mechanical power transmitting wire 51A that has a first end that is configured so as to enable coupling to and uncoupling from the second ends of the car mechanical power transmitting wires 51C and 51 D using the wire coupling mechanism 79; and a wire tension applying means 60 that operates a second end portion of the extended mechanical power transmitting wire 51 A, and that is configured such that pivoting forces that pivot the movable arms 23A and 23B can be applied in directions that move second end portions of the first and second movable arms 23A and 23B closer to each other by means of the extended mechanical power transmitting wire 51A and the car mechanical power transmitting wires 51C and 51 D that are coupled to the wire coupling mechanism 79.

The apron 99 has a first operating port 100a that is formed on the apron 99 such that a portion of the lower portion of the cage 16 that corresponds to the disposed position of the wire coupling means 80 is exposed to the landing 18.

The first ends of the car mechanical power transmitting wires 51C and 51D are coupled to the second end portions of the movable arms 23A and 23B in advance in a similar manner to that in which the extended mechanical power transmitting wires 51A and 51B were coupled to near the second end portions (mechanical power operating portion 30a and 30b) of the movable arms 23A and 23B in Figure 6. The second ends of the car outer wires 52b of the car mechanical power transmitting wires 51C and 51D are coupled to the wire coupling means 80 in a similar manner to that in Figures 15 and 16.

The wire coupling means 80 is fixed to the lower portion of the cage 16 in close proximity to the first operating port 100a. Detachable portions 54b at second end portions of the car mechanical power transmitting wires 51C and 51D are screwed into screw-threaded apertures 81a and 81 b of a first wire coupling portion 81 from an opposite side to a second wire coupling portion 82.

Next, a method for releasing braking of the car 15 when an actuator 40 fails and unexpected braking has been applied to the car 15 will be explained.

The car 15 has been stopped at a position between landings 18 of adjacent floors at which a predetermined lower region of the car doorway 16d faces a landing doorway 18a.

Maintenance personnel ready the extended mechanical power transmitting wire 51A and the wire tension applying means 60.

In addition, the maintenance personnel open the landing doors (not shown), and form a screen between the landing 18 and the hoistway 2 by sliding the protecting plates 100 such that an amount of projection of the apron 99 below the cage 16 is increased in order to prevent tools that are used in the work, etc., from dropping into the hoistway 2. Here, the wire coupling means 80 is exposed to the landing 18 by means of the first operating port 100a. The maintenance personnel then couple the extended outer wire 52a of the extended mechanical power transmitting wire 51A to the wire coupling means 80, and then couple the second ends of the car inner wires 53b of the car mechanical power transmitting wires 51C and 51D and the first end of the extended inner wire 53a of the extended mechanical power transmitting wire 51A in a similar manner to that shown in Figures 15 and 16. The maintenance personnel also fix the second end of the extended outer wire 52a of the extended mechanical power transmitting wire 51A to the outer wire fixing portion 66 of the wire tension applying means 60, and fix the second end of the extended inner wire 53a to the tip end of the inner wire fixing arm 61 B using the inner wire fixing member 69b, in a similar manner to that shown in Figures 8 and 9.

The maintenance personnel then pull the second end portion of the extended mechanical power transmitting wire 51A using the wire tension applying means 60, in a similar manner to the explanation in Figure 9, moving the second end portions of the movable arms 23A and 23B closer to each other to release braking of the car 15.

In this state, other maintenance personnel, who are standing by in the machine room 3, perform an operation that controls the elevator controlling board 4 so as to bring the car 15 to the nearest landing 18, and move the passengers to the landing 18 from inside the cage 16.

According to Embodiment 7, second ends of car outer wires 52b and car inner wires 53b of an elevator 1 are disposed on a lower portion of a car 1 near a landing 18. The elevator 1 has an apron 99 that is disposed so as to project downward from an edge portion of the lower portion of the car 15 near the landing 18, and a first operating port 100a is formed on the apron 99 such that a portion of the lower portion of the car 15 that corresponds to second end positions of the car outer wires 52b and the car inner wires 53b is exposed to the landing 18.

Consequently, during an occurrence of unexpected braking of the car 15, maintenance personnel can couple an extended outer wire 52a and an extended inner wire 53a of an extended mechanical power transmitting wire 51A to the car outer wires 52b and the car inner wires 53b of car mechanical power transmitting wires 51C and 51 D using a wire coupling means 80 from a landing 18 using the first operating port 100a without having to move to an upper portion of the car 15. In addition, braking of the car 15 can be released, as described above, if maintenance personnel pull the second ends of the extended inner wires 53a using the wire tension applying means 60.

Thus, because time until the braking of the car 15 is released is shortened further, time until the passengers inside the cage 16 can be moved to the landing 18 can be shortened further. The passengers inside the cage 16 are thereby released from anxiety sooner.

Moreover, in Embodiment 7, the first operating port 100a is explained as being formed on the apron 99 in a vicinity of a wire coupling means 80 that couples second ends of car mechanical power transmitting wires 51C and 51D that are led to a lower portion of a car 15. However, provided that the second ends of the car mechanical power transmitting wires 51C and 51D (the second ends of the car outer wires 52b and the car inner wires 53b) are led to the lower portion of the car 15 in advance, it is not necessary to couple them to the wire coupling means 80 in advance, and it is also possible to couple the car outer wires 52b to the wire coupling means 80, and then couple the extended inner wire 53a to the car inner wires 53b.

The above effects can also be achieved if the wire coupling means 80 in Embodiment 6 is fixed to the lower portion of the car 15 in close proximity to the first operating port 100a.

The above effects can also be achieved if the identical electric potential distributing and supplying means 87 in Embodiment 4 is fixed to a lower portion of the car 15 in close proximity to the first operating port 100a.

In other words, the above effects can also be achieved if the first operating port 101a is formed on the cage 16 so as to expose not only the second ends of the car outer wires 52b and the car inner wires 53b, but also second ends of the car electric power source lines 71d that have been led to a predetermined portion of the car 15 such as the upper portion of the car 15, etc., or so as to have an opening in close proximity to the second ends of the car electric power source lines 71d.

### Embodiment 8

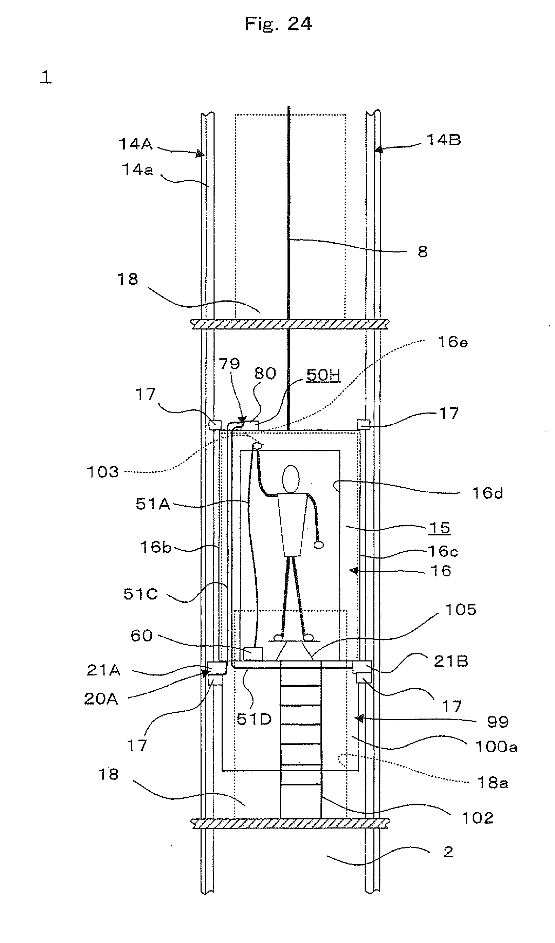

Figure 24 is a schematic diagram of an elevator according to Embodiment 8 not part of the present invention.

Moreover, in Figure 24, to facilitate explanation, depiction of building walls that form a hoistway is omitted, and a landing doorway is depicted by dotted chain lines.

Portions identical to or corresponding to those in the above embodiments will be given identical numbering, and explanation thereof will be omitted.

In Figure 24, an elevator 1 includes: a car braking apparatus 20A that has main body portions 21A and 21 B that are disposed on lower portions of a car 15 that correspond to positions of car guide rails 14A and 14B; and a remote braking release mechanism 50H for performing release of braking of the car 15 by the car braking apparatus 20A by remote control if an actuator 40 has failed.

The remote braking release mechanism 50H includes: car mechanical power transmitting wires 51C and 51 D that are each constituted by car outer wires 52b and car inner wires 53b that have first ends that are coupled to the main body portions 21A and 21 B, and second ends that are led to an upper portion (a predetermined portion) of the car 15; and a wire coupling mechanism 79 that has a wire coupling means 80 that is fixed to the upper portion of the car 15, and to which the second ends of the car outer wires 52b are coupled.

The remote braking release mechanism 50H also includes: an extended mechanical power transmitting wire 51A that has a first end that is configured so as to enable coupling to and uncoupling from the second ends of the car mechanical power transmitting wires 51C and 51D using the wire coupling mechanism 79; and a wire tension applying means 60 that operates a second end portion of the extended mechanical power transmitting wire 51A, and that is configured such that pivoting forces that pivot the movable arms 23A and 23B can be applied in directions that move second end portions of the first and second movable arms 23A and 23B closer to each other by means of the extended mechanical power transmitting wire 51A and the car mechanical power transmitting wires 51C and 51D that are coupled to the wire coupling mechanism 79.

The remote braking release mechanism 50H also includes: a second operating port 16e that is formed on the cage 16 such that the wire coupling means 80 of the wire coupling mechanism 79 is exposed, or so as to have an opening in close proximity to the wire coupling means; and a port cover 103 that is mounted to a ceiling of the cage 16 so as to enable the second operating port 16e to be opened and closed. Moreover, the port cover 103 is normally locked in order to prevent tampering by passengers.

The first ends of the car mechanical power transmitting wires 51 C and 51D are coupled to the second end portions of the movable arms 23A and 23B in advance in a similar manner to that in which the extended mechanical power transmitting wires 51A and 51 B were coupled to near the second end portions (mechanical power operating portion 30a and 30b) of the movable arms 23A and 23B in Figure 6. The second ends of the car outer wires 52b of the car mechanical power transmitting wires 51C and 51D are coupled to the wire coupling means 80 in a similar manner to that shown in Figures 15 and 16.

Next, a method for releasing braking of the car 15 when an actuator 40 fails and unexpected braking has been applied to the car 15 will be explained.

The car 15 has been stopped at a position between landings 18 of adjacent floors at which a predetermined lower region of the car doorway 16d faces a landing doorway 18a.

Maintenance personnel ready the extended mechanical power transmitting wire 51A, the wire tension applying means 60, and a foot stool 105. In addition, the maintenance personnel open the landing doors (not shown), and form a screen between the landing 18 and the hoistway 2 by sliding the protecting plates 100 such that an amount of projection of the apron 99 below the cage 16 is increased in order to prevent tools that are used in the work, etc., from dropping into the hoistway 2. The maintenance personnel also take the extended mechanical power transmitting wire 51A, the wire tension applying means 60, and the foot stool 105 and enter the cage 16 using a ladder 102 that functions as an ascending and descending means.

The maintenance personnel then step up onto the foot stool 105 and open the port cover 103, couple the first end of the extended outer wire 52a to the wire coupling means 80, and couple the first end of the extended inner wire 53a to the second ends of the car inner wires 53b from inside the cage 16 using the second operating port 16e, and pull the second end of the extended inner wire 53a to release braking of the car 15 using the wire tension applying means 60.

In this state, other maintenance personnel, who are standing by in the machine room 3, perform an operation that controls the elevator controlling board 4 so as to bring the car 15 to the nearest landing 18, and move the passengers to the landing 18 from inside the cage 16.

According to Embodiment 8, an elevator 1 includes: a second operating port 16e that is formed on the cage 16 such that the wire coupling means 80 of the wire coupling mechanism 79 is exposed, or so as to have an opening in close proximity to the wire coupling means 80; and a port cover 103 that is mounted to a ceiling of the cage 16 so as to enable the second operating port 16e to be opened and closed.

Consequently, if the car doorway 16d is facing a landing doorway 18a during an occurrence of unexpected braking of the car 15, maintenance personnel can enter the cage 16, and couple the first end of the extended mechanical power transmitting wire 51A to the second ends of the car mechanical power transmitting wire 51C and 51D using the wire coupling means 80 from inside the cage 16 using the second operating port 16e. In addition, braking of the car 15 can be released, as described above, if maintenance personnel pull the second ends of the extended inner wires 53a using the wire tension applying means 60.

Because entering the cage 16 is easier than moving to the upper portion of the car 15, the time until the braking of the car 15 is released is shortened. Consequently, the time until the passengers inside the cage 16 can be moved to the landing 18 can also be shortened. The passengers inside the cage 16 are thereby released from anxiety sooner.

Moreover, in Embodiment 8, a second operating port 16e is explained as being formed on the cage 16 such that the wire coupling means 80 of the wire coupling mechanism 79 is exposed, or so as to have an opening in close proximity to the wire coupling means 80. However, provided that the second ends of the car outer wires 52b and the car inner wires 53b are led to a predetermined portion such as the upper portion, etc., of the car 15 in advance, it is not necessary to couple them to the wire coupling means 80 in advance, and it is also possible to couple the car outer wires 52b to the wire coupling means 80, then couple the extended outer wire 52a to the wire coupling means 80, and then couple the extended inner wire 53a to the car inner wires 53b.

The above effects can also be achieved in Embodiment 6 if a second operating port 16e is formed at a position that corresponds to the car outer wires 52b and the car inner wires 53b.

The above effects can also be achieved in Embodiment 4 if the identical electric potential distributing and supplying means 87 is fixed so as to be exposed inside the cage 16, or to an upper portion of the car 15 in close proximity to the second operating port 16e. Even in that case, it is not necessary for the identical electric potential distributing and supplying means 87 to be fixed to the car 15 in advance.

In other words, the above effects can also be achieved if the second operating port 16e is formed on the cage 16 so as to expose second ends of the car electric power source lines 71d that have been led to a predetermined portion of the car 15 such as the upper portion of the car 15, etc., or so as to have an opening in close proximity to the second end of the car electric power source line 71d.

The main body portions of the car braking apparatuses 20A may also be disposed on upper portions of the car 15. In that case, if the second operating port 16e is formed in the vicinity of the main body portions, the remote braking release mechanism 50A can also be mounted to the movable arms 23A and 23B in a similar manner to that of Embodiment 1, or the remote braking release mechanism 50B mounted to the movable arms 23A and 23B in a similar manner to that of Embodiment 2, etc., using the second operating port 16e.

## Claims

1. An elevator (1) comprising:
a car guide rail (14A,14B) that is disposed so as to extend vertically inside a hoistway (2);
a car (15) that is hoistably installed inside said hoistway (2) so as to be guided by said car guide rail (14A,14B); and
a car braking apparatus (20A) comprising:
a main body portion (21A, 21B) that is installed on said car (15), said main body portion (21A,21 B) comprising:
first and second movable arms (23A,23B) that are configured such that intermediate portions are coupled by a coupling shaft (36) so as to be pivotable around said coupling shaft (36), such that second end portions move toward or away from each other in a different direction from first ends when first end portions move toward or away from each other, and that are disposed such that an axial direction of said coupling shaft (36) is oriented in a vertical direction, and said first end portions face each other on opposite sides of said car guide rail (14A,14B);
braking members (34a,34b) that are fixed near said first ends of said first and second movable arms (23A,23B) so as to face each other;
a forcing member (35) that forces said first and second movable arms (23A,23B) so as to pivot said first and second movable arms (23A,23B) in a direction in which said braking members (34a,34b) hold said car guide rail (14A,14B) under pressure; and
an actuator (40) that generates an electromagnetic force that pivots said first and second movable arms (23A,23B) in opposition to said force from said forcing member (35) such that said second end portions of said first and second movable arms (23A,23B) move closer together; and
a controlling means (4) that controls generation of an electromagnetic force in said actuator (40),
said car braking apparatus (20A) engaging with said car guide rail (14A,14B) to apply braking to said car (15),
wherein said elevator (1) comprises:
an extended mechanical power transmitting wire (51A,51 B) that comprises:
a tubular extended outer wire (52a) that is configured so as to enable a first end thereof to be coupled to and uncoupled from a second end portion of said second movable arm (23B) that faces said first movable arm (23A); and
an extended inner wire (53a) that is inserted through said extended outer wire (52a) so as to be slidable on an inner peripheral surface of said extended outer wire (52a), and that is configured so as to enable a first end thereof that is disposed so as to extend from said first end of said extended outer wire (52a) to be coupled to and uncoupled from said second end portion of said first movable arm (23A); and
a wire pulling means (60) that is configured so as to be coupleable to a second end of said extended outer wire (52a) that has a first end that is coupled to said second movable arm (23B), and that is configured so as to enable said force to be applied that pivots said first and second movable arms (23A,23B) around said coupling shaft (36) in a direction that moves said second end portions of said first and second movable arms (23A,23B) closer to each other by means of said extended mechanical power transmitting wire (51A,51 B) by pulling said extended inner wire (53a) in a direction in which a second end of said extended inner wire (53a) that has a first end that is coupled to said first movable arm (23A) is pulled out from said second end of said extended outer wire (52a) when coupled to said extended outer wire (52a).

## Patentansprüche

1. Fahrstuhl (1) mit:
einer Fahrkabinen-Führungsschiene (14A, 14B), die derart angeordnet ist, dass sie sich in einem Aufzugsschacht (2) vertikal erstreckt;
einer Fahrkabine (15), die hebbar in dem Aufzugsschacht (2) derart angeordnet ist, dass sie durch die Fahrkabinen-Führungsschiene (14A, 14B) geführt wird; und
einer Fahrkabinen-Bremsvorrichtung (20A) mit:
einem Hauptkörperabschnitt (21A, 21B), der an der Fahrkabine (15) angebracht ist, wobei der Hauptkörperabschnitt (21A, 21B) aufweist:
erste und zweite bewegbare Arme (23A, 23B), die derart ausgelegt sind, dass zwischenliegende Abschnitte durch einen Verbindungsschaft (36) derart verbunden sind, dass sie um den Verbindungsschaft (36) derart schwenkbar sind, dass sich zweite Endabschnitte in eine von ersten Enden unterschiedliche Richtung zueinander hin oder voneinander weg bewegen, wenn sich erste Endabschnitte zueinander hin oder voneinander weg bewegen, und die derart angeordnet sind, dass eine Axialrichtung des Verbindungsschafts (36) in einer Vertikalrichtung ausgerichtet ist, und die ersten Endabschnitte einander auf gegenüberliegenden Seiten der Fahrkabinen-Führungsschiene (14A, 14B) gegenüberliegen;
Bremselemente (34a, 34b), die nahe den ersten Enden der ersten und zweiten bewegbaren Arme (23A, 23B) derart angebracht sind, dass sie einander gegenüberliegen;
ein Beaufschlagungselement (35), das die ersten und zweiten bewegbaren Arme (23A, 23B), derart mit einer Kraft beaufschlagt, dass die ersten und zweiten bewegbaren Arme (23A, 23B) in einer Richtung geschwenkt werden, in der die Bremselemente (34a, 34b) die Fahrkabinen-Führungsschiene (14A, 14B) unter Druck halten; und
einen Aktuator (40), der eine elektromagnetische Kraft erzeugt, welche die ersten und zweiten bewegbaren Arme (23A, 23B) entgegen der Kraft des Beaufschlagungselements (35) derart schwenkt, dass die zweiten Endabschnitte der ersten und zweiten bewegbaren Arme (23A, 23B) sich näher zueinander hin bewegen; und
einer Steuereinrichtung (4), welche die Erzeugung einer elektromagnetischen Kraft in dem Aktuator (40) steuert,
wobei die Fahrkabinen-Bremsvorrichtung (20A) derart mit der Fahrkabinen-Führungsschiene (14A, 14B) in Eingriff gelangt, dass auf die Fahrkabine (15) eine Bremswirkung aufgebracht wird,
wobei der Fahrstuhl (1) aufweist:
einen Verlängerungsdraht (51A, 51B) zur Übertragung mechanischer Arbeit, welcher aufweist:
einen röhrenförmigen äußeren Verlängerungsdraht (52a), der derart ausgelegt ist, dass ein erstes Ende davon in der Lage ist, an einen zweiten Endabschnitt des zweiten bewegbaren Arms (23B), welcher dem ersten bewegbaren Arm (23A) gegenüberliegt, gekoppelt und von diesem entkoppelt zu werden; und
einen inneren Verlängerungsdraht (53a), der derart durch den äußeren Verlängerungsdraht (52a) geführt ist, dass er auf einer Innenumfangsfläche des äußeren Verlängerungsdrahts (52a) verschiebbar ist, und der derart ausgelegt ist, dass ein erstes Ende davon, das derart angeordnet ist, dass es sich von dem ersten Ende des äußeren Verlängerungsdrahts (52a) erstreckt, in der Lage ist, an den zweiten Endabschnitt des ersten bewegbaren Arms (23A) gekoppelt und von diesem entkoppelt zu werden; und
eine Draht-Zugeinrichtung (60), die derart ausgelegt ist, dass sie an ein zweites Ende des äußeren Verlängerungsdrahts (52a), welches ein erstes Ende aufweist, das an den zweiten bewegbaren Arm (23B) gekoppelt ist, koppelbar ist, und derart ausgelegt ist, dass sie durch den Verlängerungsdraht (51A, 51B) zur Übertragung mechanischer Arbeit das Aufbringen der Kraft ermöglicht, welche die ersten und zweiten bewegbaren Arme (23A, 23B) um den Verbindungsschaft (36) in einer Richtung schwenkt, welche die zweiten Endabschnitte der ersten und zweiten bewegbaren Arme (23A, 23B) näher zueinander hin bewegt, und zwar dadurch, dass sie, bei Kopplung an den äußeren Verlängerungsdraht (52a), den inneren Verlängerungsdraht (53a) in einer Richtung zieht, in der ein zweites Ende des inneren Verlängerungsdrahts (53a), welches ein erstes Ende aufweist, das an den ersten bewegbaren Arm (23A) gekoppelt ist, aus dem zweiten Ende des äußeren Verlängerungsdrahts (52a) zieht.

## Revendications

1. Ascenseur (1) comprenant :
un rail de guidage de cabine (14A, 14B) qui est disposé de manière à s'étendre verticalement à l'intérieur d'une cage (2) ;
une cabine (15) qui est installée de manière à pouvoir être treuillée à l'intérieur de ladite cage (2) de manière à être guidée par ledit rail de guidage de cabine (14A, 14B) ; et
un appareil de freinage de cabine (20A) comprenant :
une portion de corps principale (21A, 21B) qui est installée sur ladite cabine (15), ladite portion de corps principale (21A, 21B) comprenant :
des premier et deuxième bras mobiles (23A, 23B) qui sont configurés de sorte que des portions intermédiaires soient couplées par un arbre de couplage (36) de manière à pouvoir pivoter autour dudit arbre de couplage (36), de sorte que des deuxièmes portions d'extrémité se déplacent l'une vers l'autre ou à l'écart l'une de l'autre dans un sens différent à partir de premières extrémités lorsque des premières portions d'extrémité se déplacent l'une vers l'autre ou à l'écart l'une de l'autre, et qui sont disposés de sorte qu'un sens axial dudit arbre de couplage (36) soit orienté dans un sens vertical, et lesdites premières portions d'extrémité se font face l'une à l'autre sur des côtés opposés dudit rail de guidage de cabine (14A, 14B) ;
des organes de freinage (34a, 34b) qui sont fixés à proximité desdites premières extrémités desdits premier et deuxième bras mobiles (23A, 23B) de manière à se faire face l'un à l'autre ;
un organe de forçage (35) qui force lesdits premier et deuxième bras mobiles (23A, 23B) de manière à faire pivoter lesdits premier et deuxième bras mobiles (23A, 23B) dans un sens dans lequel lesdits organes de freinage (34a, 34b) maintiennent ledit rail de guidage de cabine (14A, 14B) sous pression ; et
un actionneur (40) qui génère une force électromagnétique qui fait pivoter lesdits premier et deuxième bras mobiles (23A, 23B) en opposition à ladite force dudit organe de forçage (35) de sorte que lesdites deuxièmes portions d'extrémité desdits premier et deuxième bras mobiles (23A, 23B) se rapprochent l'une de l'autre ; et
un moyen de commande (4) qui commande une génération d'une force électromagnétique dans ledit actionneur (40),
ledit appareil de freinage de cabine (20A) se mettant en prise avec ledit rail de guidage de cabine (14A, 14B) pour appliquer un freinage à ladite cabine (15),
dans lequel ledit ascenseur (1) comprend :
un câble de transmission de puissance mécanique étendu (51A, 51B) qui comprend :
un câble extérieur étendu tubulaire (52a) qui est configuré de manière à permettre à une première extrémité de celui-ci d'être couplée et découplée d'une deuxième portion d'extrémité dudit deuxième bras mobile (23B) qui fait face audit premier bras mobile (23A) ; et
un câble intérieur étendu (53a) qui est inséré à travers ledit câble extérieur étendu (52a) de manière à pouvoir coulisser sur une surface périphérique intérieure dudit câble extérieur étendu (52a) et qui est configuré de manière à permettre à une première extrémité de celui-ci qui est disposée de façon à s'étendre à partir de ladite première extrémité dudit câble extérieur étendu (52a) d'être couplée et découplée de ladite deuxième portion d'extrémité dudit premier bras mobile (23A) ; et
un moyen de tirage de câble (60) qui est configuré de manière à pouvoir être couplé à une deuxième extrémité dudit câble extérieur étendu (52a) comportant une première extrémité qui est couplée audit deuxième bras mobile (23B), et qui est configuré de manière à permettre l'application de ladite force pour faire pivoter lesdits premier et deuxième bras mobiles (23A, 23B) autour dudit arbre de couplage (36) dans un sens qui déplace lesdites deuxièmes portions d'extrémité desdits premier et deuxième bras mobiles (23A, 23B) en les rapprochant l'une de l'autre au moyen dudit câble de transmission de puissance mécanique étendu (51A, 51B) en tirant ledit câble intérieur étendu (53a) dans un sens dans lequel une deuxième extrémité dudit câble intérieur étendu (53a) ayant une première extrémité qui est couplée audit premier bras mobile (23A) est tirée hors de ladite deuxième extrémité dudit câble extérieur étendu (52a) lorsqu'il est couplé audit câble extérieur étendu (52a).
